(19) Europäisches Patentamt
European Patent Office
Office européen des brevets

(11) **EP 2 211 160 A1**

(12) **EUROPEAN PATENT APPLICATION**
published in accordance with Art. 153(4) EPC

(43) Date of publication:
**28.07.2010 Bulletin 2010/30**

(51) Int Cl.:
*G01M 15/04* (2006.01)     *B63B 9/00* (2006.01)
*G01H 17/00* (2006.01)

(21) Application number: **09715151.8**

(22) Date of filing: **19.02.2009**

(86) International application number:
**PCT/JP2009/053468**

(87) International publication number:
**WO 2009/107688 (03.09.2009 Gazette 2009/36)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.02.2008 JP 2008047537**
**16.10.2008 JP 2008266982**

(71) Applicant: **Mitsubishi Heavy Industries, Ltd.**
**Tokyo 108-8215 (JP)**

(72) Inventors:
• **SATOU, Nobuaki**
**Yokohama-shi**
**Kanagawa 236-8515 (JP)**
• **KAWAI, Kazuhiro**
**Yokohama-shi**
**Kanagawa 236-8515 (JP)**
• **MIURA, Shuichi**
**Yokohama-shi**
**Kanagawa 236-8515 (JP)**
• **MIZOGUCHI, Junji**
**Kobe-shi**
**Hyogo 652-8585 (JP)**

(74) Representative: **HOFFMANN EITLE**
**Patent- und Rechtsanwälte**
**Arabellastrasse 4**
**81925 München (DE)**

(54) **METHOD FOR ANALYZING TORSIONAL VIBRATION OF POWER TRANSMISSION SYSTEM, ANALYZING DEVICE, ANALYZING PROGRAM, AND SHAFTING DEVICE BETWEEN ENGINE AND DRIVEN DEVICE**

(57)     A method for analyzing the torsional vibration of a power transmission system by calculating the absolute damping coefficient of a cylinder portion and the relative damping coefficient between cylinders corresponding to a real engine and thereby causing the torsional vibration analysis of the power transmission system to reflect the calculated coefficients is disclosed. An analyzing device, an analyzing program, and a shafting device between the engine and the driven device are also disclosed. The system from an engine to the driven device is modeled into an inertial mass-spring system. The total damping energy, which is the vibration generating energy, balancing the vibration generating energy with the damping energy for a set of resonance points of the natural modes/frequencies is calculated from the measured damping ratio and the calculated mode mass. The total damping energy is expressed by the sum of the absolute and relative damping energies of the engine and the damping energy of an attachment of the driven device/shafting system. Engine absolute damping coefficients and equations of the engine absolute damping coefficients are generated from the result of the measurement of the resonance points to solve the simultaneous equations. Thus, the engine absolute and relative damping coefficients are determined.

FIG. 1

**Description**

**BACKGROUND OF THE INVENTION**

**Field of the Invention**

The present invention relates to a marine propulsion system, an engine generator system, a vehicle drive system; thereby, each system is a power transfer (transmission) shafting-system that is driven by an engine. More concretely, the present invention relates to:

a method for analyzing torsional vibration of the power transfer (transmission) system;
an apparatus (device) for analyzing torsional vibration of the power transfer (transmission) system;
a program (or a computer readable storage medium) for analyzing torsional vibration of the power transfer (transmission) system;
a shafting system connecting a drive engine and a driven apparatus.

**Background of the Invention**

Regarding an engine driven system such as a marine propulsion system, an engine generator system, a vehicle drive system and so on, the design technology of the shafting (system) becomes more and more important nowadays, in view of global environment protection and energy conservation.

In relation to this point of view, in the research and development of an advanced engine, a trade-off relation between the system performance and the system robustness (strength) becomes a problem to be overcome, in general; thus, a technical subject to grasp the detailed strength margin (the margin of safety) becomes a discussion issue; in particular, in the case of the shafting (system) as is applied to a marine propulsion main engine, an excessive margin may hinder the system from providing the real performance thereof, and a strength shortage or an inaccurate strength estimation may cause a maritime accident (e.g. a drift of a ship).

In connection with the above, some remarks are hereby given.

In a common engine design practice, the designers have to pay attention to the shafting (system) that transfers the power produced by the engine to the driven apparatus; thereby, the shafting includes: the drive shaft of the engine, namely the crankshaft of the engine; and, the driven shaft of the driven apparatus. If necessary, the shafting system is provided with an intermediate shaft, a coupling, a reduction gear or step-up gear and so on, between the crankshaft and the driven shaft of the driven apparatus.

When the designers pay attention to the shafting system, they are concerned with the torsional vibration of the shafting system so as to evade the failure thereof. In the case of marine main diesel engine of a ship propulsion system, the calculation sheet as to the torsional vibration for the shafting system is obliged to submit to the ship classification society in relation to the shipbuilding.

On the other hand, in order to reach the accurate estimation as to the stress or strength margin of the engine shafting, the data regarding the shafting attenuation as prerequisite data is required; however, a definite design manner as to how to grasp the shafting attenuation data is still not completely established even nowadays.

Further, it is a usual practice to perform a torsional vibration calculation for the shafting system as described above, in order to evaluate the stress level of the shafting including the crankshaft of the engine; and, the procedure of the torsional vibration calculation includes the following steps of:

(1) forming an analytical model for the torsional vibration analysis by making a spring mass model (a lumped-mass [lumped inertia mass] torsional-springs system) with a finite number of lumped masses and torsional springs between each pair of adjacent lumped masses;
(2) computing natural frequencies (eigen frequencies) and natural modes of vibration by means of an eigen-value calculation approach;
(3) computing exciting torque (or exciting energy ) from the shafting system (the crankshaft) inside of the engine, for each natural mode of vibration (for each torsional vibration node mode) as well as for each order number (order number = (the natural frequency)/(the firing frequency as to a cylinder)) of vibration corresponding to the natural mode;
(4) computing and evaluating the damping energy (such as propeller damping, generator damping, driven apparatus damping, coupling damping, damper damping, bearing damping, material damping [crankshaft hysteresis damping], engine damping due to the engine apparatuses connected the crank shaft), generally by use of experimental formule or physical laws ;
(5) computing the torsional vibration amplitude of each lumped mass on the shafting, for each natural mode of vibration (for each torsional vibration node) as well as for each order number of vibration corresponding to the natural mode, based upon a premise that the exciting energy balances with the attenuation (damping) energy under each resonance condition (each critical frequency condition) of the shafting system;

(6) comparing the computed results such as the torsional vibration amplitudes of at least one typical (reference) lumped mass with the measured result regarding the torsional vibration amplitude at the corresponding lumped mass, and confirming the safe of the shafting system or the safety margin.

It is hereby noted that the firing frequency depends on the engine speed; in two stroke cycle engines, the firing frequency is the same as the engine speed; in four stroke cycle engines, the firing frequency is a half of the engine speed.

In general, the computational results of the natural frequencies (of the above-described step (2)) based on the step of modeling (the above step (1)) are found to be in good agreement with the measured data. The reason is that the eigen value analysis in a shafting system or a structure is expected to be excellent on the whole even if a continuous distribution mass structure is modeled on the mass spring system (lumped inertia mass torsional spring system) of a moderate finite degree number as to the multi-degrees-of-freedom system;

In connection with the above, some remarks are hereby given.

In the usual torsional vibration calculation, a spring mass system of a multi-degrees-of-freedom system is adopted as a shafting model that comprises:

a plurality of lumped masses (lumped moment of inertia as a rotating circular disk) that model each part of the shafting (such a part as includes a pair of crank-webs, and a crank-pin together with the corresponding piston and connecting-rod, as well as, such a part as a fly-wheel, a coupling, a small portion of the intermediate shaft, a connecting flange portion, a driven apparatus portion and so on); and

a plurality of springs (torsional springs) between each pair of the adjacent lumped masses.

Thus, the shafting is modeled by a torsional-springs-lumped-masses system. In the next place, the natural frequencies and the natural vibration mode for the modeled system are computed by means of an eigen-value calculation method; thereby, the absolute angular amplitude at each lumped mass in response to each natural vibration mode is not determined, even if the natural (free) vibration mode is solved; therefore, an energy balance technique is introduced in order to determine the absolute angular amplitude at each lumped mass. In the energy balance technique, the exiting torque or exiting energy is computed on the basis of the engine torque harmonics and the engine firing sequence, while the damping torque or damping energy is calculated according to the experiences of the engine-manufacturers or the shipbuilders. Thus, the present invention relates to an advanced method over these experiences.

In addition, the torsional vibration calculation method may stand on a dynamic response analysis; however, this response analysis method is not so widely spread in this field. This is partly because the identification of the damping matrix of the shafting system is difficult in general, and partly because the determination of the damping coefficients to be used in relation to each lumped mass is not so clear even in consultation with the above-described experiences.

As for the step of calculating exciting torque or energy generated by the engine operation (the step (3)), the computational accuracy can be generally expected so long as the input condition as to so-called torque harmonics and the procedure as to so-called vector sum calculation are appropriate.

On the other hand, in connection with the step (the above step (4)) of calculating and evaluating the damping energy, some previous studies(for example, the non-patent reference 1) are available as to the propeller damping; further, the data as to the damping of the generator, the coupling , the damper or the driven apparatus is generally available from the manufacture of each component or apparatus.

As to the bearing damping that is attributable to the bearings inside of the engine and attenuates the torsional vibration of the shafting system at each critical (resonance) point, as well as, as to the shaft material hysteresis damping that is attributable to the material hysteresis of the spring between each pair of the adjacent lumped masses and attenuates the torsional vibration of the shafting system at each critical (resonance) point, many studies have been made; yet, a little or little is known of these kinds of damping.

In addition, the bearing damping includes so-called engine damping that is attributable to the friction between the engine running gears such as pistons and cylinder liners or between bearings and shaft surfaces, and the effect of the bearing damping depends on (is supposed to vary in response to) the absolute vibration amplitude of each lumped mass. Thus, the bearing damping is categorized into what they call an absolute damping.

On the other hand, the shaft material hysteresis damping appears on the shaft part (torsional spring part) between the pair of adjacent lumped masses (especially, between lumped masses on the crankshaft part), and the effects of the shaft material hysteresis damping depends on the relative torsion angle of the shaft part (torsional spring part). Thus, the material hysteresis damping is categorized into what they call a relative damping.

As to the bearing damping, the hydro-elastical (elastohydrodynamic lubrication) approach has been developed; however, there is a gap between the theory and the practice. In connection to the material hysteresis damping, the geometry of the crankshaft is too complicated to calculate the dissipation energy in the lubrication part as well as to calculate the dissipation energy due to the material hysteresis, even if the dissipation energy calculation can be performed.

Thus, the ways of approaching the absolute damping and the relative damping are based on educated guesses, to a greater or lesser degree, and are learned by a process of trial and error. Thus, in general, the application as to the knowledge (regarding damping coefficients) in which the design concept on a shafting system is developed is limited to the problems of similar shafting systems which the designers have experienced. Further, it is difficult to confirm the extremely good agreement between analytical damping coefficients and experimental damping coefficients, all over the range of the engine resonance frequencies (the engine critical speeds).

According to the conventional practices of torsional vibration analyses, the absolute damping or the relative damping is prone to be evaluated by conservative estimates so as to be on a safety side by introducing greater torsional vibration amplitudes or greater torsional shaft stresses. Thus, the limit design approaches have been usually given up; and, excessive safety factors are obliged to be brought into the shafting design, especially into new types of designs or of analyses.

In addition, there has not been found the patent reference on the damping or the damping coefficient (as to the torsional vibration problems), although there are general technical references such as the non-patent references 1 and 2.

Further, in this specification, the non-patent reference 3 is referred to, if needed in connection to mathematical engineering terms.

In view of the conventional problems as described-above, the present invention aims at providing a method for analyzing torsional vibration of a power transfer shafting system, an apparatus (device) for analyzing torsional vibration of a power transfer shafting system, a program (or a computer readable storage medium) for analyzing torsional vibration of a power transfer system, and a shafting system connecting a drive engine and a driven apparatus; there by the calculation accuracy as to the absolute damping and the relative damping are enhanced so as to simulate the torsional vibration regarding the real engine (namely, so as to give an advanced explanation of the torsional vibration measurement results regarding the real engine).

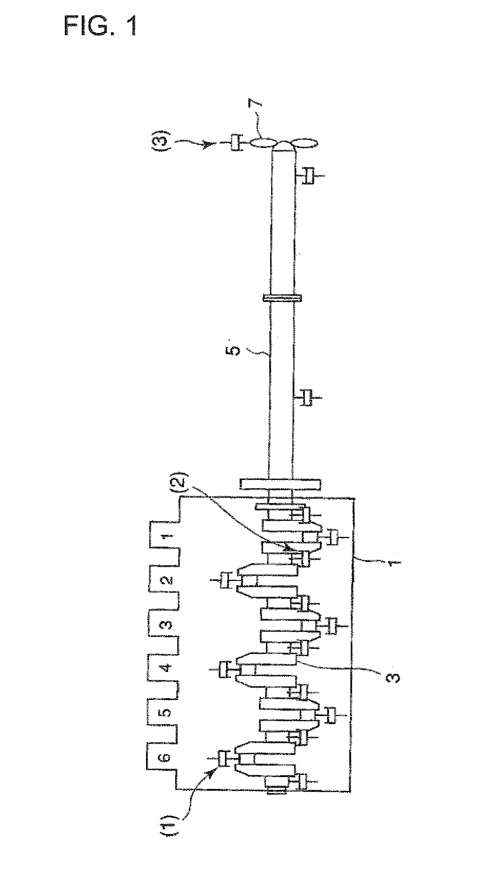

Fig. 1 shows an example of an engine-shafting system model in which a propeller as a driven apparatus is directly (without a reduction gear, an elastic coupling nor a vibration damper) coupled with the engine. In Fig. 1, the engine cylinders 1 to 6 are arranged in the engine; each cylinder is modeled as a mass of inertia (an inertia mass); a propeller is arranged at the n-th node (point) on the shafting. At the other nodes (points) on the shafting, masses of inertia that models each part of the shafting such as the shaft part in the neighborhood of the node, a series of gears (cam-shaft drive gears and the like), a flywheel, the shafting equipment (dampers, reduction gears couplings if any) are placed. As a matter course, the propeller in Fig.1 may be replaced by an driven apparatus, in general.

A brief and schematic meaning as to the absolute damping as well as the relative damping can be seen in Fig. 1 in which the cylinders (that are given the notations cyl.1 to cyl.m) are placed at the points (nodes) 2 to (m+1); the absolute damping is at work on each (lumped mass [lumped moment of inertia]) of the cylinders; the absolute damping is also at work on the propeller at the node n. On the other hand, the relative damping is at work at each torsional spring between the adjacent cylinders (i.e. between a crank to the adjacent crank).

[Non-patent Reference 1] W. Ker Wilson Practical Solution of Torsional Vibration Problems, 1959;
[Non-patent Reference 2] N. Akabori, Torsional Vibration of Marine Propulsion Engine (in Japanese), Sankaidou 1963;
[Non-patent Reference 3] Dictionary of Mathematics (in Japanese), 4-th ed., Iwanami, 2007.

## SUMMARY OF THE INVENTION

In response to the objectives of this invention, the concrete subjects thereof are evaluating the absolute damping that is at work on each cylinder (each crank-throw) and the relative damping that is at work on the torsional shaft part between the adjacent crank-throws, in conformity with the real engine shafting system, and reflecting the evaluated (computed) damping characteristics or the evaluating (computing) method on the torsional vibration analysis as to the power transfer shafting system.

In addition, it is noted that the term "crank-throw" is to mean a space between the adjacent partition walls that sandwiches a cylinder of the engine ; the term "crank-throw" is also used to mean the whole running gears inside the space.

In order to obtain a solution for the above-described subjects, a first aspect of the present invention provides a method for analyzing torsional vibration of a power transfer shafting system that connects a drive engine to a driven apparatus, the system comprising the steps of:

forming an analysis model of a mass-inertia torsional-spring model for the power transfer shafting system from the engine to the driven apparatus;
computing the total vibration damping energy equivalent to the engine vibration exciting energy, based on a measured damping ratio (ζ) and the mode mass of inertia ($I_e$), at a plurality of critical frequencies of a plurality of natural vibration modes thereby the engine exciting energy balances with the vibration damping energy;

forming a plurality of simultaneous equations regarding the absolute engine damping coefficient for evaluating the absolute damping energy on the engine side as well as the relative engine damping coefficient for evaluating the relative damping energy on the engine side, based on the torsional vibration measurements at or around a plurality of the torsional vibration resonance points, by expressing the total damping energy in a form of the summation of the absolute engine damping energy on the engine side, the relative engine damping energy on the engine side and the damping energy due to the driven apparatus and the accessories on the shafting system;

identifying the absolute engine damping coefficient and the relative engine damping coefficient, by solving the simultaneous equations.

The physical basis of the present invention is laid on the following energy balance equation that holds while the shafting is kept under a resonance condition.

$$\text{Exciting Energy} = \pi \cdot A_k \cdot \theta_L \cdot \left| \sum_{j=2}^{m+1} \beta_j \right|$$

$$= \text{Damping Energy of Shafting System} = \pi \cdot \omega \cdot \theta_L \cdot \sum_{i=1}^{n} C_i$$

$$\beta_i{}^2 \qquad\qquad\qquad\qquad (1)$$

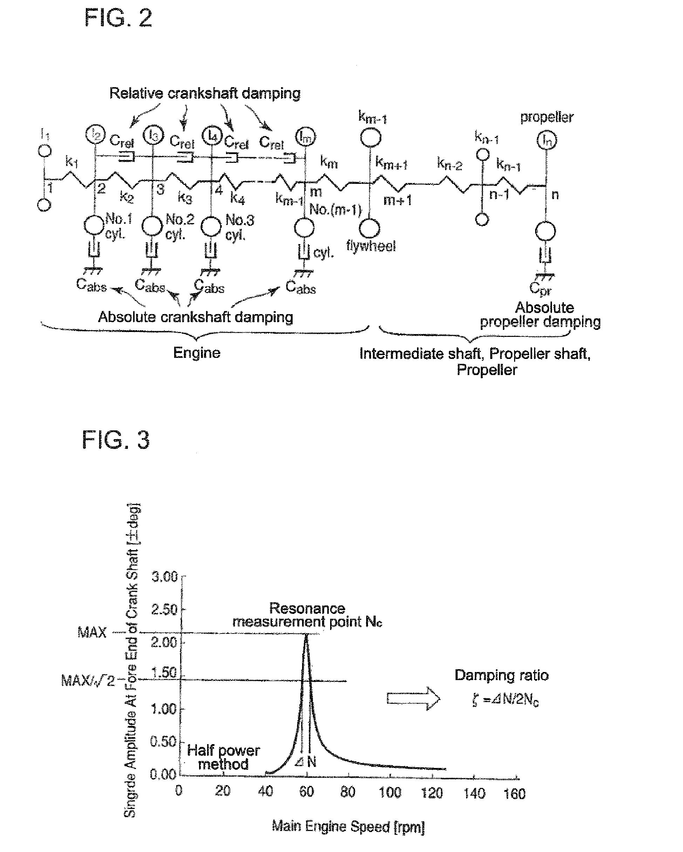

where, $A_k$ is k-th order component of the torque harmonics (per one cylinder); $\theta_L \cdot \left| \sum_{j=2}^{m+1} \beta_j \right|$ is the vector sum that is calculated with the amplitude distribution $\beta_j$ (j= 2 ~ m+1) as to the lumped masses from cyl.1 to cyl.m (from node 2 to node m+1 in Fig.2) as well as the firing sequence and the firing interval; ω is the angular velocity of the engine under the resonance frequency and the frequency order; $C_i$ (i= 1 ~ n) is the absolute damping coefficient for the mass of inertia at the lumped mass i; $\theta_L$ is angular (half) vibration amplitude at a reference position (a reference lumped mass that is usually the top front mass location on the shafting); $\beta_i$ is the non-dimensional angular displacement of the mass (the number i), and $\beta_i$ (i = 1 ~ n) totally forms the torsional vibration mode at a natural frequency mode of the shafting. In other words, the set of $\beta_i$ (i = 1 ~ n) is the torsional vibration amplitude distribution all

over the lumped masses, the distribution being expressed in a relative angular displacement distribution pattern with the displacement 1 (e.g. unit radian or unit degree) at a reference lumped mass.

It is noted that the relative damping energy is omitted in the most right side of the above equation (1); in this regard, the detail is described in the following context.

Further, as to the term $\sum_{i=1}^{n} C_i \beta_i{}^2$ in the right end side of the equation (1), the detail including the relative damping energy within the crankshaft (usually the relative damping energy in the other torsional spring part is neglected) is expressed in the following equation (2).

$$\sum_{i=1}^{n} C_i \beta_i{}^2 = C_{abs} \sum_{i=2}^{m+1} \beta_i{}^2 + C_{rel} \sum_{j=2}^{m} (\beta_{j+1} - \beta_j)^2 + C_{pr} \beta$$

$$\beta{}^2 \qquad\qquad\qquad\qquad (2)$$

where, $C_{abs}$ is the (common) coefficient of the absolute damping that is at work on the lumped mass at each cylinder (each crank-throw); $C_{rel}$ is the coefficient of the relative damping that is at work on the shafting system between a cylinder (crank-throw) and the adjacent cylinder (crank-throw); $C_{pr}$ is the coefficient of the absolute damping that is at work on the driven apparatus (the propeller). As is already touched on, the effect of the absolute damping depends on the absolute vibration amplitude of each lumped mass at the cylinder (crank-throw) location as well as the propeller location, whereas the effect of the relative damping depends on the relative vibration amplitude (relative torsional angle) between the adjacent cylinders (crank-throws).

On the other hand, the exciting energy of the left end side of the equation (1) has been expressed in the following form.

$$\mathtt{Exciting\ Energy} = \pi\ A_k\ \theta_L\ \left|\ \sum_{j=2}^{m+1} \beta_j\ \right| \qquad\qquad (3)$$

where, ,

$A_k$ is k-th order component of the torque harmonics (in consideration per one cylinder);

$\beta_j$ ($j$ = 2 ~ m+1) is the (half) torsional vibration amplitude including phase difference information (i.e. $\beta_j$ is not a scalar but a vector) at each cylinder as an inertia mass inertia, the phase difference being brought due to firing intervals;

$\left|\ \sum_{j=2}^{m+1} \beta_j\ \right|$ is the so-called vector sum that is determined when each natural vibration mode is calculated and all the $\beta_j$ ($j$ = 2 ~ m+1 as well as $j$ = 1 ~ n) are solved; the set of $\beta_j$ or $|\beta_i|$ ($j$ = 2 ~ m+1 as well as $j$ = 1 ~ n) forms an eigen-vector corresponding to a natural vibration mode; therefore, the amplitude magnitude of a lumped mass is determined if an absolute amplitude including the phase difference information at a standard (reference) point is determined; $\theta_L$ is angular (half) vibration amplitude at the reference position (the reference [the standard] lumped mass location that is usually the top front mass location on the shafting). In this way, the torsional vibration exciting energy can be calculated as a value by multiplying the vector sum $\left|\ \sum_{j=2}^{m+1} \beta_j\ \right|$ by $\pi\ A_k\ \theta_L$.

Accordingly, by using the equations (1), (2) and (3), the following equation is obtained.

$$\sum_{i=1}^{n} C_i \beta_i{}^2 = \pi\ A_k\ \theta_L\ \left|\ \sum_{j=2}^{m+1} \beta_j\ \right|\ /\ \pi\ \theta_L \qquad\qquad (4)$$

Thus, in a case where the torque harmonics $A_k$ ($k$ = 1,2,3, ⋯ [two stroke cycle engine] or $k$ = 0.5,1,1.5,2,2.5 ⋯ [two stroke cycle engine]) and the vector sum are known, the left side of the equation (2) or (4), namely $\sum_{i=1}^{n} C_i \beta_i{}^2$

can be obtained. The value $\sum_{i=1}^{n} C_i\ \beta_i{}^2$ is sometimes called the equivalent damping coefficient (of the whole shafting system).

On the other hand, by using the equivalent damping coefficient, the engine damping (attenuation) ratio $\zeta$ is calculated by use of the following equation.

$$\zeta = \sum_{i=1}^{n} C_i\ \beta_i{}^2\ /\ \left(2\ \omega\ \sum_{i=1}^{n} I_i\ \beta_i{}^2\right) \qquad\qquad (5)$$

where, the term $\sum_{i=1}^{n} I_i\ \beta_i{}^2$ that appears in the denominator of the right side of the equation (5) is called the equivalent inertia moment (or the modal mass), and represented by $I_e$ in this specification. Since the natural torsional

vibration mode $\beta_i$ ($i = 2 \sim m+1$) and each inertia mass $I_i$ ($i = 1 \sim n$) are known through the step of forming an analytical model for the torsional vibration analysis as well as the step of computing natural frequencies (eigen frequencies) and natural modes of vibration by means of an eigen-value calculation approach, the equivalent inertia moment

$I_e$ $\left( = \sum_{i=1}^{n} I_i \beta_i^2 \right)$ can be computed. Further, the engine damping (attenuation) ratio $\zeta$ can be known through the torsional vibration measurement, according to the so-called half value width rule (cf. Fig.3), at each one of a plurality of the resonance points (the critical speeds or frequencies $\omega$) as to the torsional vibration of the shafting system. As a matter of course, the equivalent inertia moment $I_e$ $\left( = \sum_{i=1}^{n} I_i \beta_i^2 \right)$ may be computed by means of the equation (3) or (4), based on the estimation as to the torsional vibration exciting energy.

In summary, the non-dimensional angular displacement (amplitude) distribution mode $\beta_i$ over the whole lumped masses as well as the equivalent inertia moment (the modal mass) $I_e$ $\left( = \sum_{i=1}^{n} I_i \beta_i^2 \right)$ can be obtained through calculations; the angular frequency $\omega$ at each resonance point as well as the engine damping ratio $\zeta$ can be evaluated through the torsional vibration measurements.

Thus, for each resonance point, the term $\left( \sum_{i=1}^{n} C_i \beta_i^2 \right)$ on the left side of the equation (2) can be computed. Further, the damping coefficient $C_{pr}$ of the propeller as an example of a driven apparatus can be known based on the information data from the supplier of the apparatus; in some cases, the already published theses may be helpful. In response to the numbers of the to-be-focused resonance points, the numbers of equations in the form of the equation (2) are obtained.

When the coefficient $C_{pr}$ is known, the equation (2) is regarded as an equation in which the absolute damping coefficient $C_{abs}$ and the relative damping coefficient $C_{rel}$ are unknown. Further, when each of these coefficients is simply regarded as a constant independent of the angular frequency, two equations in the form of the equation (2) are formed by reflecting the result of the torsional vibration measurements at and around two pertinent resonance points, so that the two unknowns ($C_{abs}$ and $C_{rel}$) are solved.

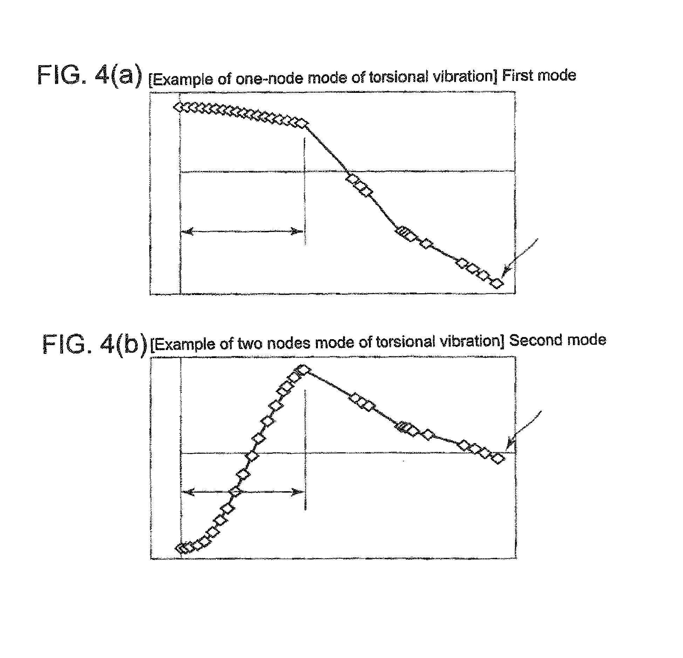

In solving the simultaneous equations as to the two unknowns, it is preferable that the absolute engine damping coefficient $C_{abs}$ is solved in consideration of an experience law that the relative damping energy in the one-node natural vibration mode (cf. Fig. 4(a)) is negligible (namely, the term multiplied by the constant relative damping coefficient $C_{rel}$ can be eliminated in the equation (2), because of the aspect of one-node torsional vibration mode in which ($\beta_{j+1} - \beta_j$) = 0, (j= 2 to m ) as well as because of the experience law that the exciting energy is balanced with the sum of the absolute engine damping energy and the damping energy due to the driven apparatus and the accessories on the shafting system; further, when an additional equation in the form of the equation (2) is formed as per a resonance point of the two-nodes natural vibration mode (cf. Fig. 4(b)), the relative engine damping energy (the middle term in the right side of the equation (2)) is computed and the relative engine damping coefficient $C_{rel}$ is solved, since the coefficient $C_{abs}$ is already solved and the unknown is only one parameter $C_{rel}$ in the additional equation in which the exciting energy, the absolute engine damping energy, and the damping energy due to the driven apparatus and the accessories on the shafting system are calculated in relation to the equation (2).

For instance, in a marine propulsion shafting system where the main engine is usually directly-coupled with the shafting system (the shaft having the propeller), when the torsional vibration measurement is performed at or around a resonance point of the one-node natural vibration mode (cf. Fig. 4(a)), the relative engine damping can be negligible, and the equation (2) becomes a linear equation as to only one unknown $C_{abs}$. Thus, the absolute engine damping coefficient $C_{abs}$ is immediately solved

Further, when the torsional vibration measurement is performed at or around a resonance point of the two-nodes natural vibration mode (cf. Fig. 4(b)), then the (absolute) propeller damping is negligible, since the torsional amplitude $\beta_n$ of the propeller becomes almost zero in the two-nodes natural vibration mode; further, since the absolute damping coefficient $C_{abs}$ has been solved just before, the unknown $C_{rel}$ in the equation (2) as to the two-nodes natural vibration mode can be solved by using the coefficient $C_{abs}$.

However, the present invention is limited to neither selecting two equations in the form of equation (2), nor solving the unknowns $C_{abs}$ and $C_{rel}$ in the selected equations in consideration of special conditions as described above. Hereafter, the unknowns $C_{abs}$ and $C_{rel}$ will be described with symbols $A$ and $B$ respectively, for the convenience of description. As explained later, there may be more than three relational expressions for the two unknowns $A$ and $B$.

When the number of the unknowns does not agree with the number of the linear simultaneous equations (relational expressions) as to the unknowns, the simultaneous equations may be solved according to the least square approach or the generalized reverse matrix approach. Therefore, even if there are more than three equations for the absolute engine damping coefficient $A$ and the relative engine damping coefficient $B$ as unknowns, the simultaneous equations, namely the unknown coefficients $A$ and $B$ can be solved.

It is now explained that the least square approach, for instance, is applicable for solving the simultaneous equations, supposing the following three equations for the two unknowns $A$ and $B$ have been obtained.

$$a_1 A + b_1 B = c_1$$
$$a_2 A + b_2 B = c_2 \qquad\qquad (6)$$
$$a_3 A + b_3 B = c_3$$

Hereby, if the following error function $f$, for instance,

$$f = (a_1 A + b_1 B - c_1)^2 + (a_2 A + b_2 B - c_2)^2 + (a_3 A + b_3 B - c_3)^2 \qquad (7)$$

is taken into consideration, then the function $f$ is expressed in a positive definite quadratic form as to the unknowns $A$ and $B$; by calculating the partial differential coefficients of $f$ with respect to the unknown $A$, as well as $B$, and by letting the calculated partial differential coefficients be zero, a set of linear simultaneous equations (two equations for two unknowns) is obtained. Thus, the unknowns $A$ and $B$ can be solved.

Further, the set of the simultaneous equations (6) of three relational expressions as to the two unknowns $A$ and $B$ can be solved according to the generalized inverse matrices (there are four kinds of patterns as to the generalized inverse matrix approach). The least square approach in which an error function such as the above function $f$ in the definition (7) is minimized. On the other hand, the generalized inverse matrix approach by which a set of simultaneous equations such as a set of the equations (6) are solved includes the manner in the usual solution as to a set of simultaneous linear equations in which the number of unknowns agrees with the number of equations. In other words, the least square approach or the generalized inverse matrix approach expands the solution as to a regular linear simultaneous equations.

As described above, the approaches according to the least square method or the generalized inverse matrix method can be regarded as a tool for solving optimization problems as well as planning optimal designs rather than a mere solver for linear simultaneous equations; especially, the latter (generalized inverse) method can be applied to the singular value decomposition (a kind of spectral resolution) as to non-square matrices; namely, the generalized inverse matrix approach can present a solution in a physical meaning, a statistical meaning, a geometrical meaning or an information technological meaning, even if the number of the unknowns is over or under the number of simultaneous equations. In this context, a method for solving linear simultaneous equations can be generally said to belong to the generalized inverse matrix approach; in another expression, it is difficult to say that the usual manner for solving a set of regular simultaneous equations is independent of the two approaches described above. However, the usual manner cannot reach the applicable area of the two approaches, since the agreement between the number of unknowns and the number of equations is often too strict to obtain a useful conclusion.

Apart from the above linear algebraic methods, there may exist a primitive trial-and-error approach; thereby, unknown parameters or an unknown vector is moved at random (for instance, by means of random occurrence device [random number generator]) so as to find the parameters or the vector that makes the left side of the equations agree with the right side of the equations; in this trial-and-error approach, the agreement between the left and right sides can be estimated by the difference between the left side vector (or a left side parameter) and the right side vector (or a right side parameter). In the trial procedures, if the difference gets closer to 0-vector (or 0), then the trial vector (or the parameter) is regarded as a solution. As a matter of course, another expression is that the ratio of each of the vector components (parameters) as to the left side to the corresponding vector components (parameters) as to the right side gets closer to 1.

The manner as described above may be called a kind of Monte Carlo method; and, the manner is generally inefficient, even if a high-speed random occurrence device is provided. Thus, the direction of the present invention is further progressive and comprehensive; thereby, the basis of the solution is placed on the least square approach or the generalized inverse matrix approach.

Further, if there is a rule by use of the orthogonal table (orthogonal array) in selecting of the unknown vector (or the parameters), the trial-and-error approach may be called a kind of experimental design approach. As for the experimental design approach, the approach has two aspects; one is the aspect of a primitive trial-and-error approach, and the other is the aspect of the linear algebraic approach. So long as the experimental design approach has the latter aspect, the present invention clarifies the algebraic aspects and incorporates the potential applicability of the experimental design approach.

In addition, a note is hereby given: if there is any rule (even the randomness as per a random number generation may be considered a rule on the basis of the central limit theory), in selecting of the unknown vector (or the parameters), the trial-and-error approach may be related to an algebraic approach or a statistical approach. Thus, the present invention also tries to develop the potential applicability (if any) of the trial-and-error approach.

Thus, the present invention relates to the solution of simultaneous equations by not only advanced linear algebraic manners but also trial and error approaches by use of the orthogonal tables in the field of the design of experiments. Although the methods according to the design of experiments are considered useful and practical, the methods may be not so theoretical in the ultimate analysis. However, the present invention provides an application example as to the trial and error approaches by use of the orthogonal tables, since the application example can be regarded as an aspect of the present invention.

In other words, an aspect of the first aspect of the present invention is the method for analyzing torsional vibration of a power transfer shafting system, wherein

the absolute engine damping coefficient and the relative engine damping coefficient are identified by solving the plurality of simultaneous equations (such as the equations (6)) by use of the approach according to a design of experiments and an orthogonal table thereof; the procedure for identifying the damping coefficients sequentially comprising the steps of:
selecting an orthogonal table that is used in the design of experiments or making an orthogonal table;
preparing a plurality of trial values of $n_{abs}$ levels, for the unknown absolute damping coefficient $A$ as well as a plurality of trial values of $n_{rel}$ levels, for the unknown relative damping coefficient $B$, so that the number of the product ($n_{abs}$ x $n_{rel}$) agrees with the number of the rows of the orthogonal table and the each row of the table corresponds to a combination of the levels of the trial values as to the absolute damping coefficient and a level of the trial values as to the relative damping coefficient;
defining the sensitivity and the S/N ratio as the functions that depend of at least one parameter in the simultaneous equations, thereby the parameter can be estimated by calculation as well as measurement, and the functions can be the indices of the degree of satisfaction as to how far the simultaneous is satisfied by the parameter and the trial values as to the unknowns;
defining still concretely the sensitivity as a value that represents a value such as a ratio regarding the degree of agreement between the calculated parameter value and a measured parameter value, thereby the sensitivity is to be estimated not only at a trial combination point (corresponding to a row of the table) but also at a plurality of points around the trial combination point, so that the mean value as to the sensitivity can be taken into account regarding the trial combination point;
defining still concretely the S/N ratio as an objective function of the factors including the above-described parameter in the simultaneous equations, thereby the S/N ratio is to be estimated not only at a trial combination point (corresponding to a row of the table) but also at a plurality of points around the trial combination point, so that the distribution kurtosis and variance as to the function (the S/N ratio) can be taken into account regarding the trial combination point and the mean value of the sensitivity;
identifying the unknown absolute damping coefficient $A$ and the unknown relative damping coefficient $B$ so that the sensitivity gets closer to a prescribed goal value and/or the S/N ratio is optimized under a predetermined criterion.

In the present invention, the engine damping within the engine is separated into the absolute engine damping (that is characterized by the absolute damping coefficients) and the relative engine damping (that is characterized by the relative damping coefficients); further, the torsional vibration measurement data at or around a plurality of resonance points are effectively used in order to evaluate the two kinds of damping coefficients.

Since the absolute damping (the absolute damping coefficient) and the relative damping (the relative damping coefficient) as per the practical engine operation condition and the data thereunder can be computed according to the present invention, the invention can provide a useful method for settling the failures on the shafting system as well as the vibration difficulties on the shafting system; moreover, the invention can provide a method for accurately estimating the torsional vibration response on the shafting during the engine transient operation (from a stabilized operation to a stabilized operation).

The second aspect according to the present invention relates to a devise invention that performs the method invention of the first aspect of the present invention; the present invention provides a torsional vibration analyzing apparatus for analyzing torsional vibration of a power transfer shafting system that connects a drive engine to a driven apparatus, the analyzing apparatus comprising:

an inertia-mass torsional spring system modeling means for forming an analysis model of a mass-inertia torsional-spring model for the power transfer shafting system from the engine to the driven apparatus;

a total (exciting) energy computing means for computing the total vibration damping energy equivalent to the engine vibration exciting energy, based on a measured damping ratio $\zeta$ and the mode mass of inertia $I_e$, at a plurality of critical frequencies of a plurality of natural vibration modes thereby the engine exciting energy balances with the vibration damping energy;

a simultaneous equation generating means for forming a plurality of simultaneous equations regarding the absolute engine damping coefficient for evaluating the absolute damping energy on the engine side as well as the relative engine damping coefficient for evaluating the relative damping energy on the engine side, based on the torsional vibration measurements at or around a plurality of the torsional vibration resonance points, by expressing the total damping energy in a form of the summation of the absolute engine damping energy on the engine side, the relative engine damping energy on the engine side and the damping energy due to the driven apparatus and the accessories on the shafting system;

a simultaneous equation solving means for identifying the absolute engine damping coefficient and the relative engine damping coefficient, by solving the simultaneous equations.

According to the above devise (apparatus) invention, as per the practical engine operation condition and the data thereunder, the absolute damping or the absolute damping coefficient as well as the relative damping or the relative damping coefficient can be computed, as is the case with the effect of the method invention.

The third aspect according to the present invention relates to a program (or a computer readable storage medium) invention that performs the method invention of the first aspect of the present invention; the present invention provides a program (or a computer readable storage medium) for analyzing torsional vibration of a power transfer shafting system that connects a drive engine to a driven apparatus, the program being provided with:

an inertia-mass torsional spring system modeling means for forming an analysis model of a mass-inertia torsional-spring model for the power transfer shafting system from the engine to the driven apparatus;

a total (exciting) energy computing means for computing the total vibration damping energy equivalent to the engine vibration exciting energy, based on a measured damping ratio $\zeta$ and the mode mass of inertia $I_e$, at a plurality of critical frequencies of a plurality of natural vibration modes thereby the engine exciting energy balances with the vibration damping energy;

a simultaneous equation generating means for forming a plurality of simultaneous equations regarding the absolute engine damping coefficient for evaluating the absolute damping energy on the engine side as well as the relative engine damping coefficient for evaluating the relative damping energy on the engine side, based on the torsional vibration measurements at or around a plurality of the torsional vibration resonance points, by expressing the total damping energy in a form of the summation of the absolute engine damping energy on the engine side, the relative engine damping energy on the engine side and the damping energy due to the driven apparatus and the accessories on the shafting system;

a simultaneous equation solving means for identifying the absolute engine damping coefficient and the relative engine damping coefficient, by solving the simultaneous equations.

According to the above program invention (or a computer readable storage medium_invention), as per the practical engine operation condition and the data thereunder, the absolute damping or the absolute damping coefficient as well as the relative damping or the relative damping coefficient can be computed, as is the case with the effect of the method or device invention; the invention can provide a method for accurately estimating the torsional vibration response on the shafting during the engine transient operation (from a stabilized operation to a stabilized operation); further, since the torsional vibration analysis as described above needs computer calculations as a precondition, the above program invention can provide a useful tool for designing the shafting system between the engine and the driven apparatus.

The fourth aspect according to the present invention relates to a devise invention that performs the method invention of the first aspect of the present invention; the present invention provides the power transfer shafting system from the drive engine to the driven apparatus, whereby the shafting system is provided with a power transfer shafting that is designed on the basis of, as well as, by use of the absolute engine damping coefficient and the relative engine damping coefficient that are analytically identified.

More concretely, the present invention provides the power transfer shafting system from the drive engine to the driven apparatus, whereby the shafting system is provided with a power transfer shafting that is designed on the basis of, as well as, by use of the absolute engine damping coefficient and the relative engine damping coefficient that are analytically identified.

According to the above device (the shafting device) invention, the shafting system can be designed based upon the absolute damping (the absolute damping coefficient) and the relative damping (the relative damping coefficient) as per the practical engine operation condition and the data thereunder; thus, the present invention can provide a highly reliable and safety shafting system of a marine diesel engine propulsion system between the engine and the propeller, the shafting system comprising the crankshaft, the shafting including the propeller shaft, and the propeller.

According to the present invention, the estimation accuracy regarding the absolute engine damping as well as the relative engine damping can be enhanced as per the practical engine operation condition and the data thereunder (so that the measurement results are predicted with accuracy).

Thus, the shafting system from the drive engine to the driven apparatus the (shafting) system which has been prone to be designed with excessive safety factors can be cost-effectively designed.

Moreover, being able to evaluate the torsional vibration of an engine system with accuracy is nothing but enhancing the technological level of the projection and assessment as to the high harmonic(s) vibration in the field of the ship hull design or the engine foundation/powerhouse design; namely, the present invention is also useful for the whole engine plant. Further, the present invention contributes to the limit design approach that is a prerequisite to the development of an advanced engine for environment protection, resource-savings and energy conservation.

According to the present invention, since the safety margin (or the safety factor) can be accurately reflected on the specification of the shafting system, an effective means for trouble analyses as to the shafting system can be provided.

Further, in the power transfer shafting system between the drive engine and the driven apparatus that are designed and manufactured according to the present invention, the enhanced reliability and safety thereof can be achieved thanks to the design and manufacturing based on the accurately estimated damping coefficients.

## BRIER DESCRIPTION OF THE DRAWINGS

Fig. 1 explains the configuration as to a diesel engine shafting system including the crankshaft of a diesel engine, according to an embodiment of this invention; Fig.1 also explains where typical damping effects appear in the shafting system under the torsional vibration condition;

Fig. 2 shows an analytical model as to a power transfer shafting system that connects the diesel engine to a driven apparatus, according to an embodiment of the present invention;

Fig. 3 shows an example of a resonance amplitude response curve as to a lumped mass on the shafting at and around a critical frequency, according to an embodiment of this invention; further, Fig.3 relates to a method for solving a damping ratio, according to an embodiment of the present invention;

Fig. 4(a) shows an example of a natural mode of vibration, namely the first torsional vibration mode (one-node mode or I -mode), as to the power transfer shafting that connects the diesel engine and the driven apparatus, according to an embodiment of the present invention;

Fig. 4(b) shows an example of a natural mode of vibration, namely the second torsional vibration mode (two-nodes mode or II-mode), as to the power transfer shafting that connects the diesel engine and the driven apparatus;

Fig. 5 generally explains the existence of torsional vibration resonance points (the distribution as to torsional vibration frequencies), thereby each resonance point is featured with a combination of the natural vibration mode number (such as I -mode, II-mode, III -mode, ⋯), as well as the vibration order number (such as 1st-order, 2nd-orde, 3rd-order, ⋯); in addition, in Fig. 5, the lateral axis denotes the engine speed (e.g. in revolutions per minute) and the vertical axis denotes the resonance amplitude (e.g. in radian) at a reference lumped mass;

Fig. 6 shows a block diagram as to a torsional vibration analyzing apparatus for analyzing the torsional vibration of a power transfer shafting system, according to an embodiment of this invention;

Fig. 7 shows an example of an L18 orthogonal table, in relation to an embodiment of this invention

Fig. 8(a) shows an example of S/N ratio, according to an embodiment of the present invention;

Fig. 8(b) shows an example of sensitivity (sensitiveness), according to an embodiment of the present invention;

Fig. 9 shows an example drawing as to an evaluation result whereby the curves of the S/N ratio and the relative damping coefficient (both in the vertical axis) is drawn with regard to the absolute damping coefficient (in the lateral axis).

## DETAILED DESCRIPTION OF THE PREFERRED EMBODIMENTS

Hereafter, the present invention will be described in detail with reference to the embodiments shown in the figures. However, the dimensions, materials, shape, the relative placement and so on of a component described in these embodiments shall not be construed as limiting the scope of the invention thereto, unless especially specific mention is made.

Fig. 1 explains the configuration as to a diesel engine shafting system including the crankshaft of a diesel engine, according to an embodiment of this invention; Fig.1 also explains where typical damping effects appear in the shafting system under the torsional vibration condition.

Fig. 1 shows an propeller shaft 5 that is connected to a crankshaft 3 of a diesel engine, as well as a propeller 7 that is fitted to the rear most end of the propeller shaft 5; namely, the shafting (system) includes the crankshaft 3 and the propeller shaft 5. In the torsional vibration of the shafting system the vibration which is excited by the engine operation, the damping that absorbs the vibration exciting energy comprises:

the absolute damping that acts on the part (1) where the damping is effective regarding the absolute swing of the torsional amplitude (angular velocity) at the corresponding node [point] of mass (the moment of inertia as a lumped inertia mass of the location (1)), thereby the damping is called the absolute (engine) damping, and the absolute engine damping is derived from the damping effect due to the sliding movement of the reciprocating gear such as the piston as well as due to the rotational movement of the shaft part (the crank-pin) in the crank-pin bearing;

the relative damping that acts on the part (2) where the damping is effective regarding the material damping of the crankshaft (the crank journal part supported by the main bearing) between the adjacent masses of inertia that are placed at both sides of a main bearing in the inertia-mass torsional-spring model, thereby the damping is called the relative (engine) damping, and the relative engine damping is derived from the relative torsional angular velocity of the adjacent masses of inertia;

the propeller damping that acts on the part (3) where the damping is effective regarding the absolute swing of the torsional amplitude (angular velocity) at the location (3) where the lumped inertia mass of the propeller is placed in the inertia-mass torsional-spring model, thereby the damping is called the propeller damping, and the propeller damping is derived from the absolute torsional angular velocity of the lumped inertia mass.

Fig. 2 shows an analytical model as to a power transfer shafting system that connects the diesel engine to a driven apparatus, according to an embodiment of the present invention. Generally in the torsional vibration analysis model of the shafting system, a finite number of lumped inertia masses are placed from the engine free end on the front side (the left side in Fig. 4) of the shafting to the driven apparatus on the rear side (the right side in Fig. 4) of the shafting; thereby, the whole inertia mass of the shafting system is divided into the lumped inertia masses (elements), and a torsional spring (element) is placed between each pair of adjacent lumped inertia masses. Thus, the lumped inertia masses and torsional springs configure the torsional vibration analysis model that is called an inertia-mass torsional-spring model (or simply, a mass spring system). In addition, since the lumped inertia elements are placed at both the end points of a spring element, the points where the inertia masses are placed are sometimes called nodes, as is the case with the expression in a finite element method (FEM), apart from the expression such as one-node vibration mode or two-nodes vibration mode.

In Fig.2, the inertia mass corresponding to the free end part of the front-end side before the front-most cylinder is concentrated at the node (point) 1. At each node from the node 2 to the node (m+1) [from the first cylinder to the m-th cylinder], the inertia mass corresponding to each cylinder (crank-throw) is concentrated. The m inertia masses correspond to a m-cylinders engine of an in-line type or a 2m-cylinders engine of a V-type.

At the rear most end node n, the inertia mass corresponding to the driven apparatus (the propeller) is placed. The inertia mass of the driven apparatus may be divided into a plurality of lumped inertia masses; namely, the divided inertia masses of the driven apparatus may be placed at a plurality of corresponding nodes. In fact, in a case where the driven apparatus is an AC generator, the lumped inertia mass of the generator is usually modeled so as to comprise the generator and the exciter.

Further, in the area between the node (m+1) corresponding to the cylinder m and the node n corresponding to the rear most end of the cylinders, the inertia masses are placed corresponding to the shafting components such as camshaft drive gears, a flywheel, a coupling or damper element, intermediate shaft parts and so on, as deemed appropriate.

The example of Fig. 2 shows that a common type of absolute damping characterized by a common absolute damping coefficient $C_{abs}$ acts on the lumped inertia masses from the node 2 to the node (m+1), in response to the cylinder (crank-throw) 1 to the cylinder (crank-throw) m; whereby, the damping energy that is absorbed by each lumped mass includes the damping energy due to the concerned crank-pin bearing, the running gears and a part of main bearing. On the other hand, a common type of relative damping characterized by a common relative damping coefficient $C_{rel}$ acts on each shaft part (the modeled part as a torsional spring element) between the pair of adjacent lumped masses, namely between adjacent crank-throws; whereby, the damping energy that is absorbed by each spring element is due to the (material) hysteresis damping that is generated in the shaft part (the torsional spring element). Further, the absolute damping acts on the driven apparatus (the propeller) on the node (point) n; whereby, a part of the torsional exciting energy is absorbed in a form of an absolute damping energy characterized by an absolute damping coefficient $C_{pr}$, in response to the absolute torsional vibration amplitude of the lumped mass (the propeller).

Prior to the explanation about the balance between the exciting energy and the absorbing (damping) energy, the vibration modes in Figs. 4(a) and 4(b) are now explained.

Figs. 4(a) and 4(b) depict an example of the calculation results as to a natural mode of torsional vibration; in Fig. 4(a), I -mode (one-node mode) is shown, while II-mode (two-nodes mode) is shown in Fig. 4(b). In the I-mode (one-node mode), there is a node (point) where the torsional vibration amplitude is zero, between the engine and the driven apparatus. In the II -mode (two-nodes mode), there are two nodes (points) where the torsional vibration amplitude is zero, at or around the middle location of the crankshaft in the engine as well as just in the neighborhood of the driven apparatus (the propeller). Needless to say, the natural frequency of the I -mode (one-node mode) is greater than that of In the II-mode (two-nodes mode).

In addition, in the engine torsional vibration analysis, the term "order number" is used so as to mean ((the natural frequency)/(the firing frequency as to a cylinder)) rather than the sequence number of the natural frequency; in the case of 2-stroke cycle engines, the numbers 1,2,3,4,5, ⋯ as the " order number" appear; and, in the case of 4-stroke cycle engines, the numbers 0.5,1,1.5,2,2.5,⋯ as the "order number" appear.

In Figs. 4(a) and 4(b), I -mode (one-node mode) and II -mode (two-nodes mode) are depicted; however, it may become necessary to treat with higher degrees of modes (i.e. III-mode (three-nodes mode), IV-mode (four-nodes mode) and so on), when deemed appropriate.

In this specification, the lumped inertia mass at the location of node (point) $i$ is expressed by a symbol $I_i$; further, the torsional amplitude at the reference node (position) that usually corresponds to the free end lumped mass on the front-most side is expressed by a symbol $\theta_L$ (not shown in Fig. 4). Further, the relative torsional vibration angle at the lumped mass of inertia $I_i$ in a critical frequency vibration is expressed by a symbol $\beta_j$; whereby, the set of $\beta_i$ (i = 1 to n) is normalized so that a torsional vibration angle is set unity (e.g. 1 degree) at a certain node (usually, at the reference point of the lumped inertia mass); in other words, the set of $\beta_i$ (i = 1 to n) shows a mode in ratios rather than a set of absolute amplitudes. In addition, the angular frequency at a focused resonance point is to be expressed by a symbol $\omega$. Now then, the mode mass of inertia $I_e$ regarding the whole shafting system is defined by the following formula (8).

$$I_e = \sum_{i=1}^{n} I_i \ \beta_i^{\ 2} \qquad\qquad (8)$$

On the other hand, the total damping energy is expressed as follows:

$$\text{Total Damping Energy} = 2 \zeta \ \pi \ \omega^2 \ I_e \ \theta_L^2 \qquad (9),$$

where the symbol $\zeta$ means the so-called damping ratio that is a half the inverse of the amplification factor $M_e$ at the resonance point (the resonance revolution).

While a torsional vibration resonance condition lasts (quasi-stably) at and near a resonance point, the engine exciting energy balances with the attenuation (damping) energy. The exciting energy in the torsional vibration calculation is computed as a product of a constant $\pi$ (the circle ratio), a torque harmonic $A_k$ of the k-th order, the vector sum $\left| \sum_{j=2}^{m+1} \beta_j \right|$, and the torsional amplitude at the reference node (position) $\theta_L$ (cf. the equation (3)). It is hereby noted that the vector sum $\left| \sum_{j=2}^{m+1} \beta_j \right|$, (j = 2 to m+1) is not a scalar summation, but a summation as vectors;

namely, each $\beta_j$ itself is a vector rather than a scalar and includes phase information (due to firing intervals) relatively among the torsional vibration amplitudes (the set of $\beta_j$ (j = 2 to m+1)). Further, the term "vector sum" sometimes means

the product $\theta_L \left| \sum_{j=2}^{m+1} \beta_j \right|$ instead of the part $\left| \sum_{j=2}^{m+1} \beta_j \right|$. In any way, the part $\left| \sum_{j=2}^{m+1} \beta_j \right|$ is

computed with the vector variables $\beta_j$ ( j = 2 to m+1) and the firing sequence and the firing intervals among the engine cylinders. As for the exciting energy, in a case where the torsional calculation measurement result is obtained, the exciting energy that is equal to the total attenuation energy can be computed by the above equation (9) without using the equation (3).

More in detail, each lumped inertia mass $I_i$ is known at the stage of forming the torsional vibration analysis model; the set of $\beta_j$ (j = 2 to m+1) is also known at the stage of computing the natural frequencies as to the analysis model; in addition, the mode mass of inertia $I_e$ can be calculated by the equation (9). On the other hand, the torsional amplitude at the reference node (position e.g. at the front-most free end) $\theta_L$ is known through the measurement; the damping ratio $\zeta$ is also known through the measurement, on the basis of the so-called half-amplitude level rule (cf. Fig. 3). Thus, the exciting energy that is equal to the total attenuation energy can be computed by the equation (9).

Based on the model as per Figs. 2.4(a) and 4(b), the total attenuation energy is expressed by the following equation (10).

$$\text{Total Damping Energy} = 2\zeta\,\pi\,\omega^2\,I_e\,\theta_L{}^2$$

$$= \pi\,\omega\,\theta_L{}^2\,\left( C_{abs}\sum_{i=2}^{m+1}\beta_i{}^2 + C_{rel}\sum_{j=2}^{m}(\beta_{j+1}-\beta_j)^2 + C_{pr}\beta_n{}^2 \right)$$

$$(10)$$

In combining the equation (9) with the equation (10), the following equation (11) can be obtained.

$$2\zeta\,\omega\,I_e = \left( C_{abs}\sum_{i=2}^{m+1}\beta_i{}^2 + C_{rel}\sum_{j=2}^{m}(\beta_{j+1}-\beta_j)^2 + C_{pr}\beta_n{}^2 \right)$$

$$(11)$$

In the right side of the above equation (11), the first term relates to the absolute engine (crankshaft) damping; the second term relates to the relative damping between each pair of adjacent lumped inertia masses (adjacent cylinder lumped masses) inside of the engine; and, the third term relates to the absolute damping as to the driven apparatus (the propeller). As already described, the damping coefficient $C_{pr}$ is publicly known or can be estimated; thus, the equation (11) can be recognized as an equation regarding the unknowns $C_{abs}$ and $C_{rel}$. Hereby, the unknowns $C_{abs}$ and $C_{rel}$ will be described with symbols $A$ and $B$ respectively, for the convenience of description. According to this notation, a linear equation as to the unknowns $A$ and $B$ is obtained in response to each pair of a natural vibration mode and a resonance engine speed (of a high order critical frequency) therein.

$$a_1 A + b_1 B = c_1 \qquad\qquad (12)$$

Further, when the equation (11) is formed for another pair of a natural vibration mode and a resonance engine speed, another linear equation as to the unknowns $A$ and $B$ is obtained.

$$a_2 A + b_2 B = c_2 \qquad\qquad (13)$$

The unknowns $A$ and $B$ can be identified, by solving the simultaneous linear equations (12) and (13).

Thus, according to the above-described procedure, the engine damping coefficients that have been estimated and determined in trial-and-error approaches as well as have been prone to be arbitrarily determined for the torsional vibration analysis can be solved in a clear sequences of steps, as per practical engine operation conditions and the data thereunder.

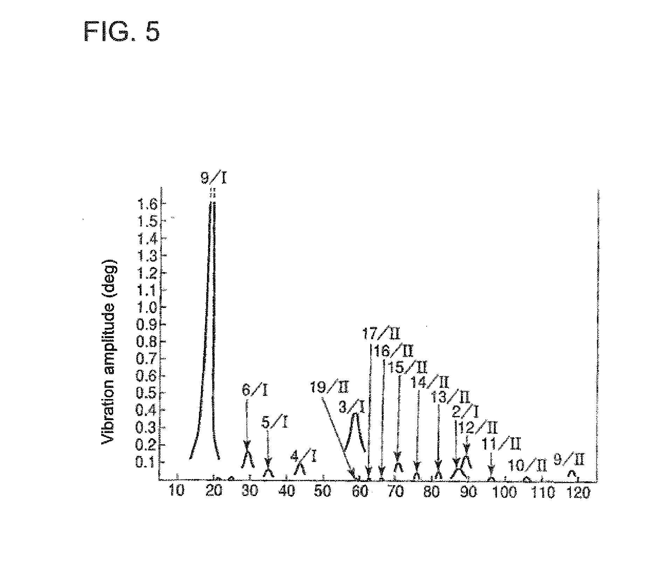

As shown in Fig. 5, there are many pairs of a natural vibration mode and a resonance engine speed (of a high order critical frequency) therein; there can be a plurality of these pairs only in the I -mode (one-node mode). If three equations are desired to be adopted to evaluate the two unknowns $A$ and $B$, then the three simultaneous equations regarding the two unknowns may be configured as per three critical frequencies out of a plurality of torsional vibration modes; and, the three simultaneous equations may be solved according to a least square method or a generalized inverse matrix approach.

At first, an example solution by use of the least square method is now explained. For instance, when the following set of three equations as to two constant unknowns are simultaneously established:

$$a_1 A + b_1 B = c_1$$
$$a_2 A + b_2 B = c_2 \qquad (14)$$
$$a_3 A + b_3 B = c_3 \ ,$$

then it will be understandable to introduce the following error function $f$.

$$f = (a_1 A + b_1 B - c_1)^2 + (a_2 A + b_2 B - c_2)^2 + (a_3 A + b_3 B - c_3)^2 \qquad (15)$$

The above error function $f$ forms a positive definite quadratic form as to the variables $A$ and $B$. By calculating the partial differentiation of $f$ with respect to the variable $A$ as well as $B$, and by setting each partial differential so as to be zero, two simultaneous equations as to the two unknowns $A$ and $B$ can be obtained. Thus, the unknowns $A$ and $B$ can be solved in a sense of the least square approximation.

In the case of the simultaneous equations (14), the number of the equations is in excess of the number of the unknowns. On the contrary, even if the number of the equation is smaller than the number of the unknowns, the least square method can be applicable. For instance, even in a case where the given equation regarding the unknowns $A$ and $B$ consists of only one relation as described below, the unknowns $A$ and $B$ can be solved by applying the least square method.

$$a_1 A + b_1 B = c_1 \qquad (16)$$

The reason for the above is that two simultaneous equations can be obtained by considering a following error function $f$ and by considering a stationary condition for the error function $f$ as is the case with the equation (16).

$$f = (a_1 A + b_1 B - c_1)^2 \qquad (17)$$

The above error function (17) corresponds to the error function (15) from which the second and third terms in the right side thereof are eliminated; the error function (17) also forms a positive definite quadratic form as to the variables $A$ and $B$. By considering the stationary condition of the function (17) as to the variables $A$ and $B$, two simultaneous equations regarding the unknowns $A$ and $B$ can be established.

As described above, whether the number of the simultaneous equations is greater or smaller than the number of the unknowns, the unknowns can be solved by applying the least square method. Thus, how the absolute damping coefficient $A$ and the relative damping coefficient $B$ can be solved is described, even if the number of the simultaneous equations is greater or smaller than the number of the unknowns.

Further, according to the present invention, the distinction between the absolute engine damping coefficient and the relative engine damping coefficient is clarified; moreover, both the coefficients are solved as per practical engine service operation conditions and the data thereunder.

Thus, the shafting system from the drive engine to the driven apparatus the (shafting) system which has been prone to be designed with excessive safety factors can be cost-effectively designed.

Moreover, being able to evaluate the torsional vibration of an engine system with accuracy is nothing but enhancing the technological level of the projection and assessment as to the high harmonic(s) vibration in the field of the ship hull design or the engine foundation design/the engine building design (powerhouse design) ; namely, the present invention is also useful for the whole engine plant. Further, the present invention contributes to the limit design approach that is a prerequisite to the development of an advanced engine for environment protection, resource-savings and energy conservation.

In the next place, an example solution by use of the generalized inverse matrix approach is now explained. The set of the three simultaneous equations (14) as to the unknowns $A$ and $B$ is again taken into consideration as an example.

The present invention applies the advantage of the generalized inverse matrix approach whereby the approach can provide solutions for a set of linear simultaneous equations, whether the number of the equations is greater or smaller than the number of the unknowns. A brief explanation is hereby given. A set of linear simultaneous equations can be described in a form that uses a matrix notation as follows.

$$D\,\boldsymbol{x}\;=\;\boldsymbol{b}$$

In the above expression, the symbol $D$ denotes a (m $\times$ n) matrix of m-rows and n-columns; the symbol $\boldsymbol{x}$ is an unknown vector of n-th dimensional vector; the symbol bis a given vector of n-th dimensional vector. In the generalized inverse matrix approach, the matrix $D$ in the above equation is not necessarily square matrix in which the number of the rows agrees with the number of the columns; nevertheless, the unknown vector $\boldsymbol{x}$ is sought for in response the given vector $b$. The generalized inverse matrix $D^-$ corresponding to the above matrix $D$ is defined as a matrix that makes the relation $D\,D^-\,D = D$ hold. By using the generalized inverse matrix, the above equation $D\,\boldsymbol{x} = b$ can be solved in the following form.

$$\boldsymbol{x} = \;D^-\boldsymbol{b}$$

Further, there are four types of generalized inverse matrices such as a minimum-norm generalized inverse, a minimum-error generalized inverse, a reflexive generalized inverse and a Moore-Penrose type generalized inverse; the last Moore-Penrose type is furnished with features of the first three types. A generalized inverse (matrix) can be regarded as a transform operator between the n-th dimension vector space and the m-th dimension vector space; further, a generalized inverse (matrix) can be regarded as a projection operator. In addition, the solution $\boldsymbol{X} = D\,\boldsymbol{b}$ obtained by a generalized inverse may be considered an extended solution of the least square method.

As described above, how the distinction between the absolute engine damping coefficient and the relative engine damping coefficient are identified is clarified, according to the calculation procedure of the present invention whether the procedure is based on the least square method or the generalized inverse matrix approach; moreover, both the coefficients can be solved as per practical engine operation conditions and the data thereunder.

Thus, the shafting system from the drive engine to the driven apparatus the (shafting) system which has been prone to be designed with excessive safety factors can be cost-effectively designed.

Moreover, being able to evaluate the torsional vibration of an engine system with accuracy is nothing but enhancing the technological level of the projection and assessment as to the high harmonic(s) vibration in the field of the ship hull design or the engine foundation design/the engine building design (such as the design of a powerhouse); namely, the present invention is also useful for the whole engine plant. Further, the present invention contributes to the limit design approach that is a prerequisite to the development of an advanced engine for environment protection, resource-savings and energy conservation.

Thus far, the absolute damping coefficient $A$ and the relative damping coefficient $B$ are regarded as constants; even in a case where these damping coefficients are variables dependent of a parameter such as a critical speed (resonance engine revolution), the present invention is effective. The effectiveness is now explained by use of the least square method.

For instance, the damping coefficients $A$ and $B$ may be expressed as the functions of engine revolution speed, namely, of angular frequency $\omega$; further, it is hereby hypothesized that the coefficient $A$ as well as $B$ is a linear function of the angular frequency $\omega$, for the sake of simplicity; namely, the following relations are postulated:

$$A = p + q \omega \qquad\qquad (18),$$

$$B = r + s \omega \qquad\qquad (19),$$

whereby $p$, $q$, $r$ and $s$ are constants, and each of the coefficients (the unknowns) $A$ and $B$ becomes a linear function with regard to the angular frequency $\omega$. In this case, if the unknown constants $p$, $q$, $r$ and $s$ are solved, then the unknowns $A$ and $B$ can be determined.

Further, in a case where the torsional vibration measurements are executed at and around three resonance points, the following relations are obtained instead of the set of three simultaneous equations (14).

$$a_1 (p + q \omega_1) + b_1 (r + s \omega_1) = c_1$$
$$a_2 (p + q \omega_2) + b_2 (r + s \omega_2) = c_2 \qquad\qquad (20)$$
$$a_3 (p + q \omega_3) + b_3 (r + s \omega_3) = c_3$$

In the above set of three simultaneous relations, the variables other than $p$, $q$, $r$ and $s$ are known through the steps of the torsional vibration analysis as well as through the torsional vibration measurements; therefore, a set of three linear simultaneous equations regarding four unknowns $p$, $q$, $r$ and $s$ is formed. Although the number of equations is smaller than the number of unknowns, the unknowns can be solved by applying the least square method as already described. As a matter of course, the number of equations, namely the number of measurement points may be equal to or more than the number of unknowns.

Further, the simultaneous equations regarding the four unknowns $p$, $q$, $r$ and $s$ can be solved by applying the generalized inverse matrix approach as is the case with the least square method. Thus, even in hypothesizing that the coefficient $A$ as well as $B$ is not a constant but a function of the angular frequency $\omega$, the absolute damping coefficient and the relative damping coefficient are determined, by using the least square method or the generalized inverse matrix approach, what is more, by reflecting practical engine operation conditions and the data thereunder.

In the equations (18) and (19), the linear functions are postulated; however, the functions may be polynomial functions of 2 or more than 2 degrees; the (finite degree) functions may be from orthogonal function systems as well as interpolation/extrapolation functions such as Lagrange's interpolation function. Thus, this invention provides a method by which the damping of the structures including engine shafting systems divided into the absolute damping and the relative damping; further, this invention presents the way how the absolute and relative damping coefficients are related to the measurement results at a plurality of resonance response measurement points as well as how the measurement results are evaluated.

In addition, an explanation is added regarding the simplest embodiment whereby the number of unknowns (constant damping coefficients) is two (namely, $A$ and $B$), and the number of simultaneous equations is two as follows.

$$a_1 A + b_1 B = c_1$$
$$a_2 A + b_2 B = c_2 \qquad\qquad (21)$$

Hereby, the two kind numbers agree with each other; the set of simultaneous equations (21) (namely, the set of the coefficient components $a_1$, $b_1$, $c_1$, $a_2$, $b_2$, and $c_2$) is derived from a resonance measurement point of the one-node mode (as depicted in Fig. 4(a)) as well as, is derived from a resonance measurement point of the two-nodes mode (as depicted in Fig. 4(b)). In other words, the first one of the simultaneous equations (21) corresponds to the one-node mode, and the second one corresponds to the two-nodes mode.

In the one-node mode, the inertia masses corresponding to the crankshaft are in a vibration condition where the torsional vibration amplitudes of the inertia masses are of an almost uniform distribution; namely, the relative torsional angle between the adjacent inertia masses can be regarded as 0. Therefore, the coefficient $b_1$ in the first one of the simultaneous equations (21) can be regarded as 0.

Further, in the one-node mode, the torsional vibration amplitude at the propeller is remarkable; thus, the term $c_1$ is meaningful (without being negligible), and the absolute damping coefficient $A$ can be easily solved. By substituting the solved value $A$ into the second one of the simultaneous equations (21), the relative damping coefficient $B$ can be also easily solved, since the propeller vibration amplitude in the two-nodes mode is close to 0 and the propeller damping energy is substantially 0 (that is, the value $c_2$ is easily calculated).

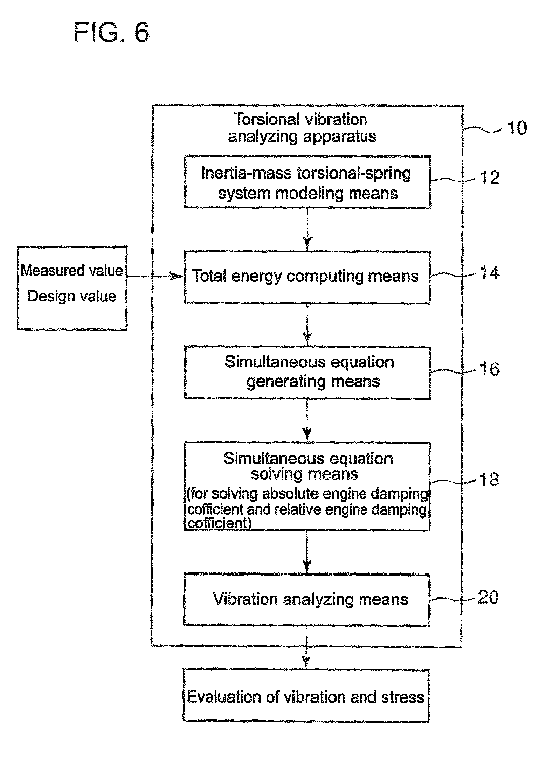

In the next place, a torsional vibration analyzing apparatus 10 as to the power transfer shafting system is now explained, the apparatus performing the above-described method by which the absolute engine damping coefficient and the relative engine damping coefficient are solved, with reference to the analyzing block configuration of Fig.6.

The torsional vibration analyzing apparatus 10 analyzes the power transfer shafting system comprising a diesel engine 1, a propeller 7 as a driven apparatus, a shafting that connects the diesel engine 1 to the propeller 7 and includes a propeller shaft 5. The torsional vibration analyzing apparatus 10 comprises an inertia-mass torsional-spring system modeling means 12 that makes a torsional vibration analysis model as shown in Fig. 2.

Further, the torsional vibration analyzing apparatus 10 comprises a total (exciting) energy computing means 14 that computes the total damping (attenuation) energy equivalent to the (engine) exciting energy, for a plurality of engine (shafting-system) critical frequencies at least one natural vibration mode, based on the measured damping ratio and the modeled (calculated) inertia-mass torsional-spring model. In the total (exiting) energy computing means 14, the damping ratio $\xi$ at the critical frequency of the natural vibration mode is solved, on the basis of the half-amplitude level rule (cf. Fig. 3 as to a resonance amplitude response curve); further, the total energy computing means 14 recognizes (be inputted) the torsional amplitude $\theta_L$ at the front-most free end of the crankshaft (3); the means 14 computes the total damping energy at the corresponding critical frequencies, by means of the equation (9), on the basis of the inputted data such as each inertia mass $I_i$ at the node $i$ on the shafting model.

Further, the torsional vibration analyzing apparatus 10 comprises a simultaneous equation generating means 16 that forms a plurality of simultaneous equations as to the absolute damping coefficient $A$ and the relative damping coefficient $B$, the simultaneous equations being derived on the basis of a plurality of critical (resonance) frequencies.

More concretely, the total damping energy calculated by the equation (9) is expressed in the form of the equation (3), namely,

$$2 \zeta \, \omega \, I_e = \left( C_{abs} \sum_{i=2}^{m+1} \beta_i^2 + C_{rel} \sum_{j=2}^{m} (\beta_{j+1} - \beta_j)^2 + C_{pr} \beta_n^2 \right) ;$$

thereby, the first, second, and the third term of the right hand of the equation (11) respectively correspond to the absolute engine (crankshaft) damping, the relative engine (crankshaft) damping and the absolute driven apparatus (propeller) damping. Further, when the absolute engine damping coefficient $C_{abs}$ and the relative engine damping coefficient $C_{rel}$ are described with symbols $A$ and $B$ respectively for the convenience of description, then an equation $a_1 A + b_1 B = c_1$ is obtained for each critical (resonance) frequency of a natural vibration mode. Thus, when multiple critical frequencies (e.g. two frequencies) are taken into consideration, then a set of simultaneous equations formed as expressed in the equations (12) and (13).

Further, the torsional vibration analyzing apparatus 10 comprises a simultaneous equation solving means 18 that solves a set of simultaneous equations for the absolute engine damping coefficient and the relative engine damping coefficient; thereby, the simultaneous equation solving means 18 is provided with a equation solving procedure by which the unknowns can be solved whether or not the number of the unknowns agree with the number of the equations. For instance, even in a case where the number of the simultaneous equations does not agree with the number of the two unknowns $A$ and $B$, the absolute engine damping coefficient and the relative engine damping coefficient are solved by use of the least square method or the generalized inverse matrix approach.

Further, the torsional vibration analyzing apparatus 10 comprises a vibration analyzing means 20 that analyzes the torsional vibration for the inertia-mass and torsianal-spring model as shown in Fig. 2 as well as solves the equations of motion as to the multi-degrees-of-freedom system in order to computes torsional amplitudes, stresses and concerned quantities regarding the shafting system, the equations of motion being expressed in the form of the following equations (22), by use of the absolute engine damping coefficient and the relative engine damping coefficient.

$$I_1 \ddot{\theta}_1 + K_1 (\theta_1 - \theta_2) = 0$$

$$I_2 \ddot{\theta}_2 + C_{abs} \dot{\theta}_2 + C_{rel} (\dot{\theta}_2 - \dot{\theta}_1) + K_1 (\theta_2 - \theta_1) + K_3 (\theta_2 - \theta_3) = f_1$$

$$I_3 \ddot{\theta}_3 + C_{abs} \dot{\theta}_3 + C_{rel} (\dot{\theta}_3 - \dot{\theta}_2) + C_{rel} (\dot{\theta}_3 - \dot{\theta}_4) + K_2 (\theta_3 - \theta_2) + K_3 (\theta_3 - \theta_4) = f_2$$

$$\vdots$$

$$I_m \ddot{\theta}_m + C_{abs} \dot{\theta}_m + C_{rel} (\dot{\theta}_m - \dot{\theta}_{m-1}) + C_{rel} (\dot{\theta}_m - \dot{\theta}_{m+1}) + K_{m-1} (\theta_m - \theta_{m-1}) + K_m (\theta_m - \theta_{m+1}) = f_{m+1}$$

$$I_{m+1} \ddot{\theta}_{m+1} + K_m (\theta_{m+1} - \theta_m) + K_{m+1} (\theta_{m+1} - \theta_{m+2}) = 0$$

$$\vdots$$

$$I_{n-1} \ddot{\theta}_{n-1} + K_{n-1} (\theta_{n-1} - \theta_{n-2}) + K_n (\theta_{n-1} - \theta_n) = 0$$

$$I_n \ddot{\theta}_n + C_{pr} \dot{\theta}_n + K_n (\theta_n - \theta_{n-1}) = 0$$

$$(22)$$

In the above equations (22) of motion, the symbol $I_m$ is the inertia mass at the m-th node (point); the symbol $\theta_m$ is the torsional amplitude at the m-th node (point); the symbol $f_i$ is the tangent force toward the rotational direction as to the crankshaft at the i-th cylinder (i = 1,2, $\cdots$ ,m-1). Further, the symbol $K_i$ denotes the torsional stiffness between the inertia masses $I_i$ and $I_{i+1}$ (i = 1,2, $\cdots$ , n-1). In addition, the above equations (22) of motion can be written in a form of matrix expression as follows.

$$M\ddot{x} + C\dot{x} + Kx = f$$

Here, symbol $M$ denotes the lumped mass (inertia mass) matrix; the symbol $C$ denotes the damping matrix; the symbol $x$ is the amplitude vector consisting of components $\theta_1$, $\theta_2$, $\theta_3$, $\cdots$ , and $\theta_n$; the symbol $f$ is the tangential force vector consisting of components 0, $f_1$, $f_2$, $f_3$, $\cdots$ , $f_{m+1}$, 0, 0, $\cdots$, 0.

In connection with the above matrix expression, the corresponding eigen-value problem is written as follows.

$$K\beta = \omega^2 M\beta$$

Here, the symbol $\omega$ denotes the natural vibration frequency (eigen-value) as to the shafting system; the symbol $\beta$ denotes the natural vibration mode (eigen-vector) as to the shafting system.

By using the absolute damping coefficient $C_{abs}$ and the relative damping coefficient $C_{rel}$ that are computed by the simultaneous equation solving means 18, the vibration analyzing means 20 solves the equations of motion or analyzes the torsional vibration model as to the engine shafting system; thus the torsional vibration analyzing apparatus 10 evaluates the stresses and torsional vibration amplitudes so as to reflect the evaluation on the design of the shafting system.

According to the torsional vibration analyzing apparatus 10, the absolute damping or the absolute damping coefficient as well as the relative damping or the relative damping coefficient can be computed, as per the practical engine operation condition and the data thereunder. On the basis of the computed damping coefficients of high accuracy, the torsional vibration analysis can be effectively performed. Thus, since the shafting system design is performed with accurately estimated damping coefficients, the safety and reliability of the shafting system can be enhanced. Moreover, the shafting system from the drive engine to the driven apparatus the (shafting) system which has been prone to be designed with excessive safety factors can be cost-effectively designed.

In the next place, another aspect of the present invention is a program (or a computer readable storage medium) for analyzing torsional vibration of a power transfer system in which the engine is connected to the driven apparatus, the program being performed on a computer system. The method on which the basis of the program is placed is the same as the method/apparatus of the present invention as described thus far. As is the case the torsional vibration analyzing apparatus 10, the program comprises: the inertia-mass-spring system modeling means 12; the total (exciting) energy computing means 14; the simultaneous equation generating means 16; the simultaneous equation solving means 18, the program solving the absolute damping coefficient and the relative damping coefficient.

According to the above-described program (or a computer readable storage medium), the absolute damping or the absolute damping coefficient as well as the relative damping or the relative damping coefficient can be computed, as per the practical engine operation condition and the data thereunder. Thus, the program can be a powerful design tool that solves the shafting troubles and vibration problems. Further, since it is a prerequisite to perform the program on a computer, the program can be a useful design method for the shafting system that connects the engine to the driven apparatus, by making the program run on a computer as well as by making the computer read the program.

Thus far, the present invention has made use of the least square method as well as the generalized inverse approach in order to solve the coefficients $C_{abs}$ (= A) and $C_{rel}$ (= B) after a set of simultaneous equations thereof are introduced. On the other hand, there are other methods for solving simultaneous equations thereby an unknown vector is solved as a convergence vector (a limiting vector). For instance, the conjugate gradient method and the over-relaxation method are widely used in the field of structural analysis.

As a matter of course, in solving the damping coefficients, the method in which a unknown vector is solved as a convergence vector (a limiting vector), by formulating a convergence procedure as per pertinent mathematical formulae, for example, based on a variational principle or the principle of virtual work, although the method based on such a principle is generally made use of in the field of structural analysis or applied mechanics analysis. In such a field, a large-scale matrix or vector is generally used so as to treat a grand scale structure or system.

However, in a meaning that the least square method or the generalized inverse approach can be related to a vector convergence (iterative) approach; for instance, a series expansion technique as to a matrix may be a kind of an iterative approach. Thus, the least square method or the generalized inverse approach on which the present invention places importance may be considered more general manner than the iterative manners such as the conjugate gradient method or the over-relaxation method.

Further, there may be another approach in which simultaneous equations are not directly solved; namely, there may be a trial and error approach. In the trial and error approach, the unknowns as initial values or the unknown vector as an initial vector is assumed; then, the assumed unknowns are substituted into the simultaneous equations; and, a degree of satisfaction as to the simultaneous equations is evaluated. Hereby, the degree of satisfaction means how the simultaneous equations are satisfied with the assumed (trial) unknowns (control factors and error factors); for instance, how the left side of the simultaneous equations agrees with the right side thereof with the trial unknowns may be the degree of satisfaction. Further, it is preferable that the degree of satisfaction is related to at least one objective function with regard to at least one unknowns (control factors and error factors); the objective function may be connected to the so-called signal noise ratio (S/N ratio) or the sensitivity in the field of experimental design; the minimal or maximal condition as to the objective function (evaluation function such as the S/N ratio or the sensitivity). When there is no evaluation function and the trial error procedure is performed at random (according to a random number scattering base), the approach may be called a kind of Monte Carlo simulation and sensitivity analysis.

For instance, in a straightforward example of the trial error approach in a case where only one factor and one equation thereof are dealt with, the factor may be determined so that the trial left side of the equation is equal to the right side of the equation when a trial factor is substituted into the both sides (or the ratio of the trial left side component to the corresponding trial right side component gets closer to 1). This approach may be also regarded as a kind of trial error approach; and the regula falsi (the criterion of convergence estimated from both sides) may be used to determine (solve) the factor. When a vector consisting of a plurality of factors is taken into consideration, the feasible area where the vector can be exist may be limited to a lower dimension vector space, step by step.

It is hereby noted the objective function may be non-continuous smooth function; the function may be discrete function as to the factors as parameters.

Further, the variance or the reciprocal of the S/N ratio may be regarded as a sensitivity analysis index to be optimized, as is the case with the design of experiments.

The above-described trial and error approach may be an application of the design of experiments (cf. the non-patent reference 3). In this specification, the design of experiments in which an orthogonal array (an orthogonal table) is introduced is to be taken into consideration. The orthogonal tables are used in the field of the design of experiments so that the number of the combinations of parameters (control factors and error factors) can be reduced and the time needed for the experiments can be saved in general. However, it is still unclear for the ordinary engineers (even the engineers who apply the technique of the design of experiments) why the orthogonal tables can be used. The concept of this invention (or the answer according to this invention) is plain and simple as to the question. This invention considers that the application of the orthogonal tables is a technique by which a vector consisting of n unknowns can be approximately expressed with m (less than n) orthogonal bases; namely, a vector in an n-th dimension space can be approximately series expanded by using the m orthogonal base vectors whereby the number m is smaller than n. The technique saving the number of the space base vectors can be recognized also in the field of multi-resolution decomposition or wavelet analysis. The orthogonal array may be regarded as a (m × n) matrix thereby the m column vectors are pulled out of a (n × n) matrix in which two different column vectors are orthogonal each other in a meaning described later. According to the above concept of the present invention, the definition of the orthogonal tables is quite clear and simple, whereas the explanation about the orthogonal tables in the field of the design of experiments is generally lacking in the consideration as to the above concept. The reason of this may be that the even skilled engineers in the field are not familiar with the special matrices such as Hadamard matrices and advanced linear algebra, while mathematical mind designers are usually inclined to not the design of experiments but the theories of Latin squares or semi-group theory.

In any way, the concept of the present invention has clarified and disclosed the feature of the design of experiments whereby the orthogonal tables are used; therefore, it becomes easy for any engineer to perform the procedures as to the design of experiments, beyond the superficial understanding therefor.

Further, according to the concept of the present invention, selecting m parameters out of n parameters corresponds to adopting m major orthogonal bases out of the whole n orthogonal bases in the n-th dimension space; namely, the important combination as to parameters is searched for according to the experiences of the engineers who knows the concerned problem well. As a matter of course, it may need several times of trials in selecting the m parameters. During the selection of major factors (parameters), the range of each parameter can be limited, when the objective functions such as the S/N ratio or the sensitivity are evaluated in parallel to the parameter selection.

In the field of the torsional vibration analysis regarding the shafting system including crankshaft, there can be found no disclosure that shows how to identify the absolute damping coefficient as well as the relative damping coefficient. The present invention discloses the method for identifying the coefficients by applying the least square method or the generalized inverse matrix approach. Further, as described above, since the technique in the design of experiments can be regarded as a kind of linear algebraic approaches (included in the least square method or the generalized inverse matrix approach), the present invention discloses a technology that is crossing the border line between the advanced linear algebra field and the experimental design field or the multivariate analysis field. An embodiment according to the cross border technology is now explained. However, the present invention does not repeat the long explanation as to the experimental design field or the multivariate analysis. Thereby, the technical terms used are "mean", "variance", "S/N ratio (signal noise ratio)", "factor (control factor and error factor)", "level", "orthogonal table" and so on. In addition, the control factor means the major factors (major parameters) that have an effect on the final unknowns (damping coefficients) such as the critical frequency $\omega$; the error factor means the subsidiary factors (secondary parameters) that have an subsidiary effect on the final unknowns (damping coefficients) such as the engine temperature, the lubrication oil temperature, the ambient temperature, the engine cooling water temperature, the exhaust gas temperature and the humidity under the torsional vibration measurements. Let's say, each of the damping coefficients $A$ and $B$ is expressed with a linear functions of all the factors, then each energy balance equation for each critical frequency at a natural vibration mode is described in a linear relation (cf. the equation (20)); thus, a set of linear simultaneous equations is obtained in terms of the major factors and error factors; thereby, the number of the unknowns for determining the final unknowns $A$ and $B$ increases in response to the number of concerned factors, as is the case of the simultaneous equation (20). Thus, a set of simultaneous equations in relation to the major and error factors is formed; the simultaneous equation can be solved in order to determine the final unknowns $A$ and $B$.

The formed set of simultaneous equations in relation to the major and error factors can be solved by the least square method or the generalized inverse matrix approach, so as to identify the absolute damping coefficient $A$ and the relative damping coefficient $B$. However, each one of the simultaneous equations may include measurement errors in relation to the measurement at each critical frequency at the concerned natural vibration mode; for instance, the influence of measurement errors due to the amplitude measurement or the half-amplitude width measurement may remain in each equation, as the each equation is obtained through the amplitude measurement and the half-amplitude width measurement). In order to eliminate (restrain) the included errors from each equation, the number of measurement repetitions has to be increased, though repeating the measurements is undesirable. Further, it is also desired that the influence of the error factors be eliminated, the measurement repetitions be evaded, and the number of the combination of the factors be restrained. In order to respond to these requirements, it is useful to introduce the design of experiments where the orthogonal tables are applied, besides the least square method or the generalized inverse matrix approach.

The method for determining the absolute damping coefficient $A$ and the relative damping coefficient $B$ is now explained, thereby the orthogonal tables in the design of experiments are made use of. A plurality of trial values of $\pi_{abs}$ levels, for the absolute damping coefficient $A$; a plurality of trial values of $\pi_{rel}$ levels, for the relative damping coefficient $B$. In other words, the trial cases of ($\pi_{abs} \times \pi_{rel}$) times are taken into consideration. The trial cases of ($\pi_{abs} \times \pi_{rel}$) times are corresponded to the rows of the orthogonal table (in a case where the L18 orthogonal table is used, the number ($\pi_{abs} \times \pi_{rel}$) is 18). Each column of the orthogonal table corresponds to one measurement based on a critical frequency. The number of measurement cases may not reach the regular number of the columns of the table. It may be convenient that the first two columns are used to describe the trial cases of ($n_{abs} \times n_{rel}$); namely, each row represents a trial combination of the damping coefficients $A$ and $B$. Further, in each cell of a row in a remaining column, an evaluated S/N ratio or an evaluated sensitivity for a measurement may be embedded. If there are still remaining columns, the cells in the columns may be used so that the cells are embedded with a dummy factor (a factor that is supposed to have substantially no effect on the measurement result) such as a humidity value during the corresponding measurement; namely, the columns may be used to remark reference data.

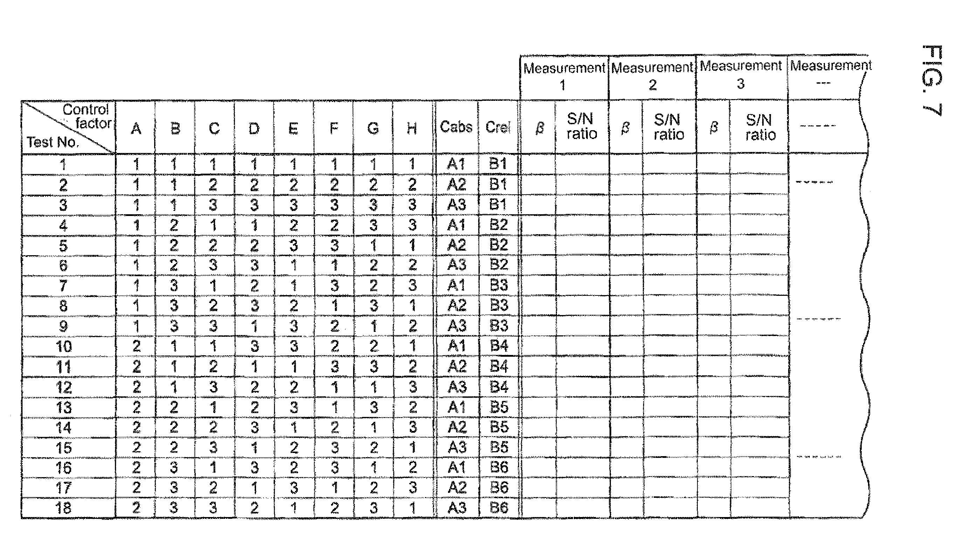

An explanation is now given about the conventional L18 table as an orthogonal table. As shown in Fig. 7, an L18 orthogonal table is a table of 18 rows and 8 columns; the L18 table can essentially treat with a plurality of trial combinations regarding 2 levels of one factor and 3 levels of 7 different factors. If all the measurement cases in response to all the combinations are taken into consideration, the number of the measurement cases reaches 4374 (= $2^1$ x $3^7$); however, according to the approach using the L18 table, the number of the factor (level) combinations can stay at 18 cases. A factor (a level factor) out of the 8 (= 1+7) factors is allocated to each of the 8 columns; a level of the factor is allocated to each row (cell) in the column. In the column (Column "A" in Fig.7) corresponding to the factor of 2 levels, 9 cells embedded with 1 (level 1) and 9 cells embedded with 2 (level 2) appear; in each of the columns (Columns "B" to "H" in Fig.7) corresponding to the factors of 3 levels, 6 cells embedded with 1 (level 1), 6 cells embedded with 2 (level 2) and 6 cells embedded with 3 (level 3). Thus, in a column of an orthogonal table, each level number of the factor corresponding to the column appears k times; thereby, the number k is equal to (the number of rows/ the number of the levels). This evenness or symmetry regarding each level of a factor forms the feature of an orthogonal table; this feature can be considered to relate to the reason why m independent vectors can approximately form a n-th dimension space whereby the number m is smaller the number n. In addition, extended columns are appended to the right most column of the (18 x 8) table, so that the obtained data according to a measurement case is embedded in the cells of each extended column.

The L18 table relates to the following matrix or simultaneous equations. Suppose the obtained data in an extended column are y1,y2,y3, ···, y17,y18. Thereby, in consideration of 8 factors (a, b, c, d, e, f, g, h), the levels of each factor and a mean value m common all over the cells in the column, 24 unknowns can be taken into consideration; the 24 (= 1+2x1+3x7) unknowns are mean, a1, a2, b1, b2, b3, c1, c2, c3, d1, d2, d3, e1, e2, e3, f1, f2, f3, g1, g2, g3, h1, h2, h3. In connection to the 24 unknowns, 18 equations in response to the each row of the L18 table, and 8 equations in response to the sum of the levels as to each factor can be obtained (26 equations in total), as follows.

$$(*1) \quad y1 = mean + a1 + b1 + c1 + d1 + e1 + f1 + g1 + h1$$

$$(*2) \quad y2 = mean + a1 + b1 + c2 + d2 + e2 + f2 + g2 + h2$$

$$(*3) \quad y3 = mean + a1 + b1 + c3 + d3 + e3 + f3 + g3 + h3$$

$$(*4) \quad y4 = mean + a1 + b2 + c1 + d1 + e2 + f2 + g3 + h3$$

$$(*5) \quad y5 = mean + a1 + b2 + c2 + d2 + e3 + f3 + g1 + h1$$

$$(*6) \quad y6 = mean + a1 + b2 + c3 + d3 + e1 + f1 + g2 + h2$$

(＊7)　　　　$y7 = m_{ean} + a1 + b3 + c1 + d2 + e1 + f3$
$+ g2 + h3$

(＊8)　　　　$y8 = m_{ean} + a1 + b3 + c2 + d3 + e2 + f1$
$+ g3 + h1$

(＊9)　　　　$y9 = m_{ean} + a1 + b3 + c3 + d1 + e3 + f2$
$+ g1 + h2$

(＊10)　　　$y10 = m_{ean} + a2 + b1 + c1 + d3 + e3 + f2$
$+ g2 + h1$

(＊11)　　　$y11 = m_{ean} + a2 + b1 + c2 + d1 + e1 + f3$
$+ g3 + h2$

(＊12)　　　$y12 = m_{ean} + a2 + b1 + c3 + d2 + e2 + f1$
$+ g1 + h3$

(＊13)　　　$y13 = m_{ean} + a2 + b2 + c1 + d2 + e3 + f1$
$+ g3 + h2$

(＊14)　　　$y14 = m_{ean} + a2 + b2 + c2 + d3 + e1 + f2$
$+ g1 + h3$

(＊15)　　　$y15 = m_{ean} + a2 + b2 + c3 + d1 + e2 + f3$
$+ g2 + h1$

(＊16)　　　$y16 = m_{ean} + a2 + b3 + c1 + d3 + e2 + f3$
$+ g1 + h2$

(＊17)　　　$y17 = m_{ean} + a2 + b3 + c2 + d1 + e3 + f1$
$+ g2 + h3$

$$(*18) \quad y18 = m_{ean} + a2 + b3 + c3 + d2 + e1 + f2 + g3 + h1$$

$$(*19) \quad a1 + a2 \quad = 0$$

$$(*20) \quad b1 + b2 + b3 = 0$$

$$(*21) \quad c1 + c2 + c3 = 0$$

$$(*22) \quad d1 + d2 + d3 = 0$$

$$(*23) \quad e1 + e2 + e3 = 0$$

$$(*24) \quad f1 + f2 + f3 = 0$$

$$(*25) \quad g1 + g2 + g3 = 0$$

$$(*26) \quad h1 + h2 + h3 = 0$$

When the right sides of the equations (*1) to (* 18) are added, the sum becomes 18 $m_{ean}$, because of the balance (symmetry) conditions regarding the equations (*1) to (*18). Thus, mean is easily solved (18 mean = y1+y2+y3+ ··· +y17+y18). When the right sides of the equations (*1) to (*9) are added , the sum becomes (9 $m_{ean}$ + 9 a1), while the sum as to the left side becomes y1+y2+y3+···y9. Since this left side and the 9 $m_{ean}$ is already known, the unknown a1 can be easily solved. In a similar way, the unknown a2 can be solved. Further, when the right sides of the equations (*1) to (*3) and (*10) to (*12) are added, the sum becomes (6 $m_{ean}$ + 6 b1), while the sum of the left sides of the equations (*1) to (*3) and (*10) to (*12) becomes y1+y2+y3+ y10+y11+y12. Thus, the unknown b1 can be solved. In this way, all the 24 unknowns can be easily solved. In the above, the sum of the levels as to each factor is supposed to be 0 (the right sides of the equations (*19) to (* 26). However, even when the right sides are not 0, the generality of the discussion just above is not lost.

Further, when the characters mean, a, b1, c, d, e, f, g, h and + in the right sides of the equations (* 1) to (* 1 8) are replaced by blank space, a (18x8) matrix corresponding to the L18 table in Fig. 7 is obtained. The (18x8) matrix consists of components (elements) 1,2 and 3. When the elements 1 and 2 for the 2-level factor are replaced by elements 1 and -1, and the elements 1,2,and 3 for the 3-level factor are replaced by 1, $\xi$, and $\xi^2$ (hereby, $\xi$ is a cube root as a complex number), then the (18x8) matrix forms a kind of special matrices like Hadamard matrix, whereby an inner product between two different column vectors therein becomes 0. Thus, even though the (18x8) matrix is not a square matrix, an inverse therefor can be easily solved; namely, an approach in the design of experiments in which an orthogonal table applied may be regarded as a special case of the generalized inverse approach.

It is, so to speak, that a set of special 8 vector bases can approximately span an 18-th dimension vector space; thereby, any two different vectors out of the 8 vectors are orthogonal each other.

Another preferable embodiment according to the present invention is further explained. One of the principal objectives of the present invention is to disclose a detail as to how to make use of the approach in the design of experiments in order to identify the absolute damping coefficient and the relative damping coefficient. Hereby, the aspect of the trial and error approach is focused on; thereby, the before-described degree of satisfaction is considered again. However, the degree of satisfaction as to the to-be-solved damping coefficients is evaluated through the S/N ratio or the sensitivity, hereafter. When the trial values regarding the absolute damping coefficient at $\pi_{abs}$ levels as well as the trial values regarding the relative damping coefficient at $\pi_{rel}$ levels are taken into consideration, the number ($\pi_{abs}$ x $\pi_{rel}$) of trial combinations is adopted so that the combination number agrees with the number of rows in a conventional orthogonal table, as shown by the L18 table in Fig. 7. The repeated trial values regarding the absolute damping coefficient may be placed in the first column of the table and the repeated trial values regarding the relative damping coefficient may be placed in the second column of the table; thereby, the repetition sequence as to the first column and the column are arranged so that the symmetry (or appearance evenness regarding the table cell components) as to the two column vectors is kept in the above-described meaning, or the inner product as to the two column vectors becomes 0 as described above. Further, a pertinent number of extended columns are added to the orthogonal table toward the right side, so that the cells in the extended columns are embedded with the values as to the S/N ratio or the sensitivity. When the orthogonal table is completed according to the measurement results, the effect on the degree of satisfaction (hereby, the S/N ratio and the sensitivity) due to a combination of the trial absolute and relative damping coefficients can be evaluated for each cell in the column corresponding to an experimental factor (such as a critical frequency). By pursuing the degree of satisfaction, the levels of each trial value (as to the damping coefficient level) can be confined to a narrow range. Further, in pursuing the objective quantity, namely, the S/N ratio and the sensitivity, the optimal point as to the S/N ratio may be sought after, after the sensitivity get closer to a prescribed value.

According the above trial-and-error approach by use of an orthogonal table conventionally used in the field of the design of experiments, the existing area regarding the combination ($C_{abs}$, $C_{rel}$) can be confined so that the damping coefficients $C_{abs}$ and $C_{rel}$ are solved. It is hereby specially emphasized that the above-disclosed approach does not solve a set of simultaneous equations. In other words, even if the governing equations for the unknowns are not clear, for instance, due to the factors that are difficult to be incorporated in the equations, the unknowns can be solved. Moreover the above-disclose approach allows the intervention of the vague factors such as temperature, humidity, lube oil temperature and error bringing parameters of discrete conditions where the influence of the factors are vague; further, the approach provides a method for restraining the error attributable to experiment measurements. Thus, the present invention widens the industrial applicability.

An additional explanation as to the sensitivity evaluation in the above embodiment is now given. Conventionally, in the field (including so-called dynamic function method) of the design of experiments, the sensitivity usually means a slope (gradient) of a characteristic curve (usually approximated by a line) that that relates a factor to the output result as to a system. However, in the above embodiment, the term "sensitivity " is used in a wider meaning. As described before, the embodiment is an approach in which a set of simultaneous equations are not directly solved; multi-level combinations of trial values for the unknowns in a wide range are tested in a trial and error approach; thereby, how the trial values satisfy the equations or the system balance is evaluated. Thus, the unknowns or the unknown vector is sought after, while the approach of the embodiment evaluates the degree of satisfaction. Rather, the degree of satisfaction may be a degree of minimization regarding a variance of the outputs generated parameter inputs through the system (or the system of relation equations). The parameter may be a control factor or an error factor. Further, the degree of satisfaction may be a degree of agreement between the left and right sides of the relation equations, if the relation equations can be grasped.

More in detail, as described above, the following 18 equations hold as the relation equations as to the absolute damping coefficient $C_{abs}$ (= A) and the relative damping coefficient $C_{rel}$ ( = B), when six levels of the trial value A and three levels of the trial value B are taken into consideration.

$$a_i A + b_i B = c_i (\zeta_i), \quad (i = 1, 2, \cdots\cdots, 18) \quad (23)$$

Hereby, the coefficients $a_i$ and $b_i$ are given at each critical frequency of the corresponding natural vibration mode as is the case with the introduction of the equation (12). In view of the before-described simultaneous equation solution, the coefficient $c_i$ is calculated as a function of the damping ratio $\xi_i$ that is obtained through the torsional vibration measurement at or around the critical frequency of the corresponding natural vibration mode, based on the half band width rule. On the other hand, since the trial values for the damping coefficients A and B are hereby given, the value $c_i$ ($\xi_i$) of the right side of the equations (23) are obtained by calculation. From the calculated value $c_i$ ($\xi_i$), the damping ratio $\xi_i$ can be also solved through the reverse manipulation against the manipulation where the value $c_i$ is calculated from $\xi_i$. The relations such as the equation (5) are thereby used. In other words, the damping ratio can be grasped in two ways: one from calculation; the other from experiment measurement. Hereby, the former is to be described with a symbol $\xi_{iCAL}$. and the latter is to be described with a symbol $\xi_{iEXP}$. The degree of agreement between the calculated damping ratio $\xi_{iCAL}$ and the measured damping ratio $\xi_{iEXP}$ can be taken into account with the ratio $\xi_{iEXP}/\xi_{iCAL}$. Hereby, this ratio is to be expressed with a symbol $\beta$ ($\beta$ is different from the vibration amplitudes $\beta_i$ and the before-described eigen-vector $\beta$). The closer the ratio $\beta$ is to 1 (namely, the closer the common logarithm $\log_{10} \beta$ is to 0 [in dB]), the greater the degree of the agreement. This embodiment shows that the sensitivity can be grasped in this way. As a matter of course, for example, the parameter $\theta_L$ instead of the parameter $\xi$ can be an index as a sensitivity.

Further, it is important that the value (the damping ratio) $\xi$ is measured or calculated at a combination of a pair of a trial value $A$ and a trial value $B$, namely, a trial combination $(A, B)$ in meaning of a two-dimension vector. At a plurality of points $(A \pm \Delta A, B \pm \Delta B)$ in the neighbor hood of the point $(A, B)$, a plurality of the ratios $\beta$ can be computed as is the case with the value $\beta$ at the point $(A, B)$; thus, a mean vale $\beta$ for a plurality of values $\beta$ can be taken into consideration for each trial combination $(A, B)$, namely , for each cell in the extended column of the orthogonal table. The variance $\sigma^2$ for the value $\beta$ is also taken into consideration in a similar way for each trial combination $(A, B)$. The values $\beta$ and $\sigma^2$ are used to define the distribution kurtosis regarding the distributed values $\beta$. In addition, when the common logarithm $\log_{10} \beta$ is close to 0, the distribution may be considered flat, and the value $\beta$ or $\xi$ is not prone to be influenced by the disturbance $\Delta A$ and $\Delta B$ around the point $(A, B)$.

Further, in this embodiment, the term S/N ratio as an objective function for evaluating the true solution point $(A, B)$ is also taken into consideration; the S/N ratio is defined as follows.

$$\mathrm{S/N \ ratio} = \log_{10} \ \{(\overline{\beta})^2 / \rho^2\} \qquad (24)$$

The S/N ratio is evaluated each trial combination $(A, B)$, namely , at each cell in the extended column of the orthogonal table. It may be considered that the greater the evaluated S/N ratio is at a trial point $(A, B)$, the more closer the trial point $(A, B)$ is to the true solution point $(A, B)$, since the above-described distribution is sharp at the trial point $(A, B)$.

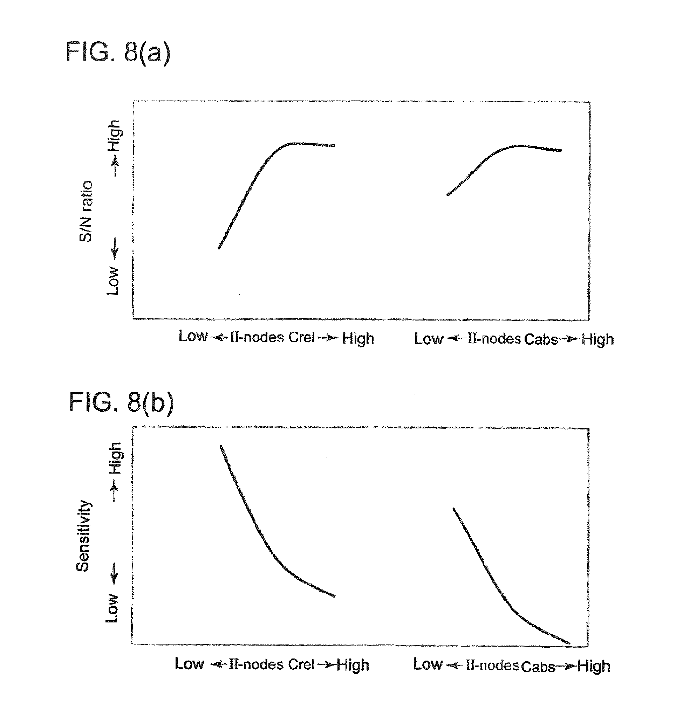

Fig. 8(a) illustratively shows an example of S/N ratio curve with regard to the relative and absolute damping coefficients, according to the above-described procedure; Fig. 8(b) illustratively shows an example of sensitivity (sensitiveness) curve with regard to the relative and absolute damping coefficients, according to the above-described procedure. By searching the area of the points $(A, B)$ where the sensitivity $\beta$ is close to 1 (namely, 0 in dB), the (feasible) area can be confined. Thus, the area where the true solution point $(A, B)$ can exists can be confined. If necessary, new six levels for the absolute damping coefficient as well as new three levels for the relative damping coefficient are assumed in the confined area, and the evaluation procedure for the sensitivity and the S/N ratio as the evaluating (objective) functions may be repeated.

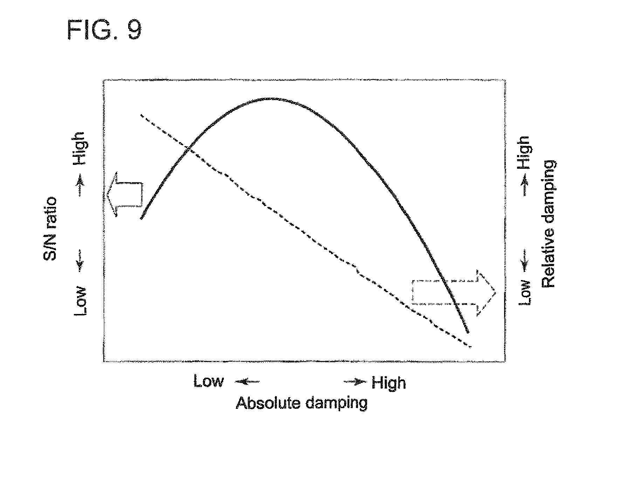

Fig. 9 shows an example drawing as to an evaluation result whereby the curves of the S/N ratio and the relative damping coefficient (both in the vertical axis) is drawn with regard to the absolute damping coefficient (in the lateral axis), in a case when the area where the true solution point $(A, B)$ can exists can be confined. As the curve of the relative damping coefficient with regard to the absolute damping coefficient is shown in Fig.9, the linear relation (the dotted line in Fig.9) between the absolute and relative damping coefficients can be confirmed; thereby, the linear relation is fundamentally derived from the relation of the equation (11). On the other hand, the curve of the S/N ratio forms a parabola shape; and, it is understood that the curve of the S/N ratio has a local maximum point. The pair of the absolute damping coefficient and the relative damping coefficient that forms the local maximum point is the very the solution for the unknowns $(A, B)$; namely, the optimal solution for the unknown absolute damping coefficient as well as the unknown relative damping coefficient is identified.

**Industrial Applicability**

According to the present invention, the absolute damping or the absolute damping coefficient as well as the relative damping or the relative damping coefficient can be computed, and the data thereunder; the present invention can be applicable to the torsional vibration analysis as to the power transfer shafting system, even when the analysis includes the analysis of dynamic response behavior. Thus the invention usefully applied to a method as well as an apparatus for analyzing torsional vibration of a power transfer system that connects the drive engine to the driven apparatus.

**Claims**

1. A method for analyzing torsional vibration of a power transfer shafting system that connects a drive engine to a driven apparatus, the system comprising the steps of:

forming an analysis model of a mass-inertia torsional-spring model for the power transfer shafting system from the engine to the driven apparatus;

computing the total vibration damping energy equivalent to the engine vibration exciting energy, based on a measured damping ratio and the mode mass of inertia, at a plurality of critical frequencies of a plurality of natural vibration modes thereby the engine exciting energy balances with the vibration damping energy;

forming a plurality of simultaneous equations regarding the absolute engine damping coefficient for evaluating the absolute damping energy on the engine side as well as the relative engine damping coefficient for evaluating the relative damping energy on the engine side, based on the torsional vibration measurements at or around a plurality of the torsional vibration resonance points , by expressing the total damping energy in a form of the summation of the absolute engine damping energy on the engine side, the relative engine damping energy on the engine side and the damping energy due to the driven apparatus and the accessories on the shafting system;

identifying the absolute engine damping coefficient and the relative engine damping coefficient, by solving the simultaneous equations.

2. The method for analyzing torsional vibration of a power transfer shafting system according to claim 1, wherein the absolute engine damping coefficient is identified based on the energy balance equation as to a critical frequency of the one-node mode of torsional vibration, thereby the relative engine damping energy is negligible and the total vibration damping energy equivalent to the engine vibration exciting energy is the summation of the absolute engine damping energy and the damping energy due to the driven apparatus and the accessories on the shafting system.

3. The method for analyzing torsional vibration of a power transfer shafting system according to claim 2, wherein the relative engine damping coefficient is identified, based on the energy balance equation as to a critical frequency of the two-nodes mode of torsional vibration, whereby the total vibration damping energy equivalent to the engine vibration exciting energy is the summation of the absolute engine damping energy, the relative engine damping energy and the damping energy due to the driven apparatus and the accessories on the shafting system; thereby, the absolute engine damping energy is calculated by use of the already obtained absolute damping coefficient.

4. The method for analyzing torsional vibration of a power transfer shafting system according to claim 1, wherein the absolute engine damping coefficient and the relative engine damping coefficient are identified by solving the plurality of simultaneous equations by use of the least square method.

5. The method for analyzing torsional vibration of a power transfer shafting system according to claim 1, wherein the absolute engine damping coefficient and the relative engine damping coefficient are identified by solving the plurality of simultaneous equations by use of the generalized inverse matrix approach..

6. A torsional vibration analyzing apparatus for analyzing torsional vibration of a power transfer shafting system that connects a drive engine to a driven apparatus, the analyzing apparatus comprising:

an inertia-mass torsional spring system modeling means for forming an analysis model of a mass-inertia torsional-spring model for the power transfer shafting system from the engine to the driven apparatus;

a total exciting energy computing means for computing the total vibration damping energy equivalent to the engine vibration exciting energy, based on a measured damping ratio and the mode mass of inertia, at a plurality of critical frequencies of a plurality of natural vibration modes thereby the engine exciting energy balances with the vibration damping energy;

a simultaneous equation generating means for forming a plurality of simultaneous equations regarding the absolute engine damping coefficient for evaluating the absolute damping energy on the engine side as well as the relative engine damping coefficient for evaluating the relative damping energy on the engine side, based on the torsional vibration measurements at or around a plurality of the torsional vibration resonance points, by expressing the total damping energy in a form of the summation of the absolute engine damping energy on the engine side, the relative engine damping energy on the engine side and the damping energy due to the driven apparatus and the accessories on the shafting system;

a simultaneous equation solving means for identifying the absolute engine damping coefficient and the relative engine damping coefficient, by solving the simultaneous equations.

7. A program or a computer readable storage medium for analyzing torsional vibration of a power transfer shafting system that connects a drive engine to a driven apparatus, the program being provided with:

an inertia-mass torsional spring system modeling means for forming an analysis model of a mass-inertia torsional-spring model for the power transfer shafting system from the engine to the driven apparatus;

a total exciting energy computing means for computing the total vibration damping energy equivalent to the engine vibration exciting energy, based on a measured damping ratio and the mode mass of inertia, at a plurality of critical frequencies of a plurality of natural vibration modes thereby the engine exciting energy balances with the vibration damping energy;

a simultaneous equation generating means for forming a plurality of simultaneous equations regarding the absolute engine damping coefficient for evaluating the absolute damping energy on the engine side as well as the relative engine damping coefficient for evaluating the relative damping energy on the engine side, based on the torsional vibration measurements at or around a plurality of the torsional vibration resonance points, by expressing the total damping energy in a form of the summation of the absolute engine damping energy on the engine side, the relative engine damping energy on the engine side and the damping energy due to the driven apparatus and the accessories on the shafting system;

a simultaneous equation solving means for identifying the absolute engine damping coefficient and the relative engine damping coefficient, by solving the simultaneous equations.

8. The power transfer shafting system from the drive engine to the driven apparatus, whereby the shafting system is provided with a power transfer shafting that is designed on the basis of, as well as, by use of the absolute engine damping coefficient and the relative engine damping coefficient that are analytically identified according to the method of claim 1.

9. The power transfer shafting system from the drive engine to the driven apparatus according to claim 8, thereby the power transfer shafting comprises an engine crankshaft, a propeller shaft and a propeller.

10. The method for analyzing torsional vibration of a power transfer shafting system according to claim 1, wherein the absolute engine damping coefficient and the relative engine damping coefficient are identified by solving the plurality of simultaneous equations by use of the approach according to a design of experiments and an orthogonal table thereof; the procedure for identifying the damping coefficients sequentially comprising the steps of:

the absolute engine damping coefficient and the relative engine damping coefficient are identified by solving the plurality of simultaneous equations (such as the equations (6)) by use of the approach according to a design of experiments and an orthogonal table thereof; the procedure for identifying the damping coefficients sequentially comprising the steps of:

selecting an orthogonal table that is used in the design of experiments or making an orthogonal table;

preparing a plurality of trial values of $\pi_{abs}$ levels, for the unknown absolute damping coefficient $A$ as well as a plurality of trial values of $\pi_{rel}$ levels, for the unknown relative damping coefficient $B$, so that the number of the product ($\pi_{abs}$ x $\pi_{rel}$) agrees with the number of the rows of the orthogonal table and the each row of the table corresponds to a combination of the levels of the trial values as to the absolute damping coefficient and a level of the trial values as to the relative damping coefficient;

defining the sensitivity and the S/N ratio as the functions that depend of at least one parameter in the simultaneous equations, thereby the parameter can be estimated by calculation as well as measurement, and the functions can be the indices of the degree of satisfaction as to how far the simultaneous is satisfied by the parameter and the trial values as to the unknowns;

defining still concretely the sensitivity as a value that represents a value such as a ratio regarding the degree of agreement between the calculated parameter value and a measured parameter value, thereby the sensitivity is to be estimated not only at a trial combination point (corresponding to a row of the table) but also at a plurality of points around the trial combination point, so that the mean value as to the sensitivity can be taken into account regarding the trial combination point;

defining still concretely the S/N ratio as an objective function of the factors including the above-described parameter in the simultaneous equations, thereby the S/N ratio is to be estimated not only at a trial combination point corresponding to a row of the table but also at a plurality of points around the trial combination point, so that the distribution kurtosis and variance as to the function of the S/N ratio can be taken into account regarding the trial combination point and the mean value of the sensitivity;

identifying the unknown absolute damping coefficient $A$ and the unknown relative damping coefficient $B$ so that the sensitivity gets closer to a prescribed goal value and/or the S/N ratio is optimized under a predetermined criterion.

FIG. 1

## FIG. 2

Relative crankshaft damping

$I_1$ $k_1$ $I_2$ $C_{rel}$ $I_3$ $C_{rel}$ $I_4$ $C_{rel}$ $C_{rel}$ $I_m$ $k_{m-1}$

No.1 cyl. No.2 cyl. No.3 cyl.

$k_2$ $k_3$ $k_4$ $k_{m-1}$ No.(m-1)

$C_{abs}$ $C_{abs}$ $C_{abs}$ $C_{abs}$ cyl. flywheel

Absolute crankshaft damping

propeller

$k_{m-1}$ $k_{n-1}$ $I_n$

$k_m$ $k_{m+1}$ $k_{n-2}$ $k_{n-1}$

$m+1$ $n-1$ $n$

$C_{pr}$

Absolute propeller damping

Engine        Intermediate shaft, Propeller shaft, Propeller

## FIG. 3

Singrde Amplitude At Fore End of Crank Shaft [±deg]

Resonance measurement point Nc

MAX ---- 2.00

MAX/√2 ---- 1.50

Damping ratio
$\zeta = \Delta N / 2 N_c$

Half power method

ΔN

3.00
2.50
2.00
1.50
1.00
0.50
0.00

0   20   40   60   80   100   120   140   160

Main Engine Speed [rpm]

FIG. 4(a) [Example of one-node mode of torsional vibration] First mode

FIG. 4(b) [Example of two nodes mode of torsional vibration] Second mode

FIG. 5

## FIG. 6

Torsional vibration analyzing apparatus — 10

Inertia-mass torsional-spring system modeling means — 12

Measured value
Design value

Total energy computing means — 14

Simultaneous equation generating means — 16

Simultaneous equation solving means
(for solving absolute engine damping cofficient and relative engine damping cofficient) — 18

Vibration analyzing means — 20

Evaluation of vibration and stress

FIG. 7

EP 2 211 160 A1

| Test No. \ Control factor | A | B | C | D | E | F | G | H | Cabs | Crel | Measurement 1 | | Measurement 2 | | Measurement 3 | | Measurement --- |
|---|---|---|---|---|---|---|---|---|---|---|---|---|---|---|---|---|---|
| | | | | | | | | | | | $\beta$ | S/N ratio | $\beta$ | S/N ratio | $\beta$ | S/N ratio | ----- |
| 1 | 1 | 1 | 1 | 1 | 1 | 1 | 1 | 1 | A1 | B1 | | | | | | | |
| 2 | 1 | 1 | 2 | 2 | 2 | 2 | 2 | 2 | A2 | B1 | | | | | | | ----- |
| 3 | 1 | 1 | 3 | 3 | 3 | 3 | 3 | 3 | A3 | B1 | | | | | | | |
| 4 | 1 | 2 | 1 | 1 | 2 | 2 | 3 | 3 | A1 | B2 | | | | | | | |
| 5 | 1 | 2 | 2 | 2 | 3 | 3 | 1 | 1 | A2 | B2 | | | | | | | |
| 6 | 1 | 2 | 3 | 3 | 1 | 1 | 2 | 2 | A3 | B2 | | | | | | | |
| 7 | 1 | 3 | 1 | 2 | 1 | 3 | 2 | 3 | A1 | B3 | | | | | | | |
| 8 | 1 | 3 | 2 | 3 | 2 | 1 | 3 | 1 | A2 | B3 | | | | | | | |
| 9 | 1 | 3 | 3 | 1 | 3 | 2 | 1 | 2 | A3 | B3 | | | | | | | ----- |
| 10 | 2 | 1 | 1 | 3 | 3 | 2 | 2 | 1 | A1 | B4 | | | | | | | |
| 11 | 2 | 1 | 2 | 1 | 1 | 3 | 3 | 2 | A2 | B4 | | | | | | | |
| 12 | 2 | 1 | 3 | 2 | 2 | 1 | 1 | 3 | A3 | B4 | | | | | | | |
| 13 | 2 | 2 | 1 | 2 | 3 | 1 | 3 | 2 | A1 | B5 | | | | | | | |
| 14 | 2 | 2 | 2 | 3 | 1 | 2 | 1 | 3 | A2 | B5 | | | | | | | |
| 15 | 2 | 2 | 3 | 1 | 2 | 3 | 2 | 1 | A3 | B5 | | | | | | | ----- |
| 16 | 2 | 3 | 1 | 3 | 2 | 3 | 1 | 2 | A1 | B6 | | | | | | | |
| 17 | 2 | 3 | 2 | 1 | 3 | 1 | 2 | 3 | A2 | B6 | | | | | | | |
| 18 | 2 | 3 | 3 | 2 | 1 | 2 | 3 | 1 | A3 | B6 | | | | | | | |

## FIG. 8(a)

Low ◄ II-nodes Crel ► High    Low ◄ II-nodes Cabs ► High

## FIG. 8(b)

Low ◄ II-nodes Crel ►High    Low ◄ II-nodes Cabs ►High

FIG. 9

<div align="center">

**INTERNATIONAL SEARCH REPORT**

</div>

| International application No. |
| --- |
| PCT/JP2009/053468 |

**A. CLASSIFICATION OF SUBJECT MATTER**
*G01M15/04*(2006.01)i, *B63B9/00*(2006.01)i, *G01H17/00*(2006.01)i

According to International Patent Classification (IPC) or to both national classification and IPC

**B. FIELDS SEARCHED**

Minimum documentation searched (classification system followed by classification symbols)
G01M15/04, B63B9/00, G01H17/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005-113934 A (Honda Motor Co., Ltd.), 28 April, 2005 (28.04.05), Full text; all drawings (Family: none) | 1-10 |
| A | Y.Wang et al., "PREDICTION OF TORSIONAL DAMPING COEFFICIENTS IN RECIPROCATING ENGINES", Journal of Sound and Vibration(2000) 238(4), 2000.12.07, pp.710-219 | 1-10 |
| A | Kazuhiro SHIONO et al., "V-Gata 10 Kito Kikan no Crank-Jikukei no Nejiri Shindo", Preprints of Meeting on Automotive Engineers No.47-00 2000 Nen Shunki Taikai, 25 May, 2000 (25.05.00), pages 1 to 4 | 1-10 |

☐ Further documents are listed in the continuation of Box C.　　☐ See patent family annex.

| | |
| --- | --- |
| *　　Special categories of cited documents: | "T"　later document published after the international filing date or priority date and not in conflict with the application but cited to understand the principle or theory underlying the invention |
| "A"　document defining the general state of the art which is not considered　to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
| --- | --- |
| 10 April, 2009 (10.04.09) | 21 April, 2009 (21.04.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. Ker.** *Wilson Practical Solution of Torsional Vibration Problems,* 1959
- **N. Akabori.** Torsional Vibration of Marine Propulsion Engine (in Japanese). Sankaidou, 1963
- Dictionary of Mathematics (in Japanese). Iwanami, 2007